# EUROPEAN PATENT SPECIFICATION

(11) **EP 1 202 475 B1**
(45) Date of publication and mention of the grant of the patent: **11.04.2007**
(21) Application number: 01125158.4
(22) Date of filing: 23.10.2001
(51) Int. Cl.: H04B 10/12, H04M 1/00

(54) **Communication system having radio units connected to optical fibers**
Übertragungssystem mit an optischen Fasern gekoppelten Funkeinheiten
Système de communication avec des unités radio connectés à des fibres optiques

(30) Priority: 25.10.2000 JP 2000326112; 19.12.2000 JP 2000385018
(43) Date of publication of application: 02.05.2002
(73) Proprietor: NTT DoCoMo, Inc., Tokyo 100-6150 (JP)
(72) Inventor: Suzuki, Yasunori, Naka-ku, Yokohama-shi, Kanagawa 231-0023 (JP); Chen, Ning, Yokohama-shi, Kanagawa 263-0053 (JP); Tarusawa, Yoshiaki, Yokosuka-shi, Kanagawa 238-0006 (JP); Nojima, Toshio, Yokosuka-shi, Kanagawa 239-0833 (JP)
(74) Representative: Hoffmann, Eckart

(56) References cited:
- EP-A- 0 805 569
- JP-A- 2000 147 306
- US-A- 6 049 593

## Description

### BACKGROUND OF THE INVENTION

The present invention relates to a communication equipment having radio access units connected to optical fibers.

Conventionally, a wireless local area network (LAN) is used indoors for radio communications between computer terminals. The wireless LAN involves no wire connection of a terminal to a LAN connecting port, and hence it provides greater flexibility in the placement of terminals than does LAN that requires wire connection between computer terminals.

The wireless LANs known so far are, for example, a radio system in the unlicensed ISM (Industrial Scientific and Medical) band at 2.4 GHz using a spread spectrum scheme, a radio channel access mehtod using OFDM (Orthogonal Frequency Division Multiplexing) scheme at 5 GHz according to IEEE802.11 and IEEE1394, and the Bluetooth (short distance radio communication scheme) using the spread spectrum scheme based on the frequency hopping system.

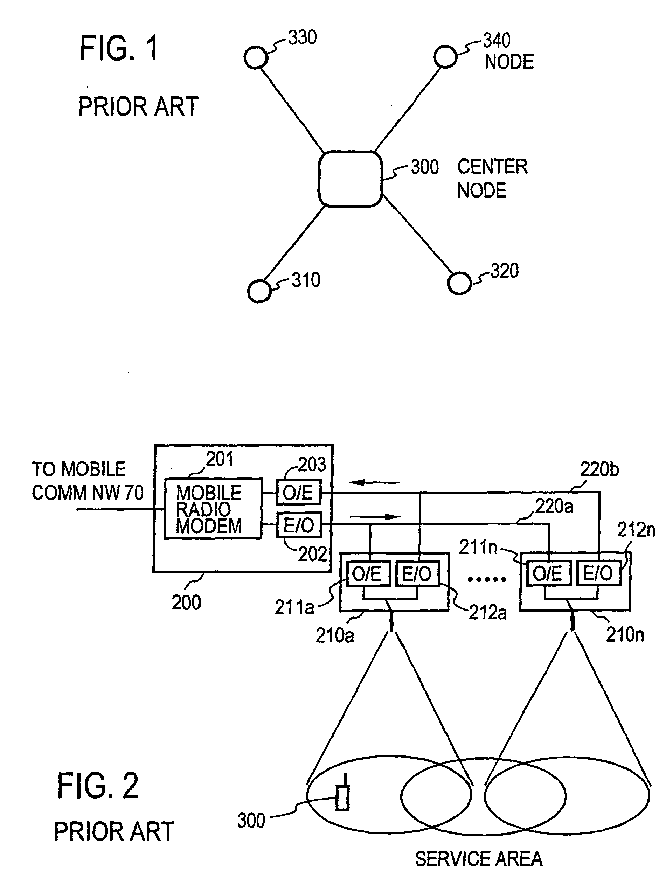

These wireless LANs mostly employ such a star network as shown in Fig. 1. The star network has a center node 300 at the center of the network and plural nodes 310 to 340 connected to the center node 300. There is also used a combinatorial wireless LAN wherein multiple center nodes of such star networks are connected by cables.

On the other hand, there has recently been put to practical use an indoor transmission system that permits the use of portable telephones and mobile stations in dead zones such as underground shopping areas, buildings and tunnels (Japanese Pat. Laid-Open Gazette No. 284837/97). The indoor transmission system comprises, as depicted in Fig. 2, a base station unit 200, radio access units 210a to 210n, and optical fibers 220a and 220b.

The base station unit 200 comprises a mobile radio modem 201, an E/O (Electrical/Optical) converter 202 for converting an electric signal to an optical signal, and an O/E (Optical/Electrical) converter 203 for converting an optical signal to an electric signal. The base station unit 200 and the radio access units 210a to 210n are connected to the optical fibers 220a and 220b. The radio access units 210a to 210n have O/E converters 211a to 211n for converting an optical signal to an electric signal and E/O converters 212a to 212n for converting an electric signal to an optical signal.

In Fig. 2, a radio-frequency signal (an RF signal) sent from a mobile station 300 is received, for example, by the radio access unit 210a, wherein it is converted by the E/O converter 212a to an optical signal. The optical signal is sent via the optical fiber 220b to the base station unit 200, wherein it is converted by the O/E converter 203. The signal thus converted to an electric signal is demodulated by the mobile radio modem 201 as predetermined for connection to a mobile communication network 70.

On the other hand, a signal from the mobile communication network 70 is modulated by the modem 201 as predetermined and converted by the E/O converter 202 into an optical signal, which is sent via the optical fiber 220a to the radio access units 210a to 210n. The radio access units 210a to 210n convert the received optical signal by 211a to 211n to an electric signal, and radiate radio waves to mobile stations 300. The mobile stations 300 receive the RF signals.

In the conventional communication equipment of Fig. 2, since radio access units send the same down-link radio signal, the radio zone configuration is virtually a single cell. On this account, the subscriber capacity of the indoor radio system is limited as compared with an outdoor radio system.

A communication equipment according to the pre-characterizing portion of claim 1 is known from EP-A-0 805 569. In this prior art, a plurality of radio access units and a base unit are cascade-connected via optical fibers, and the base unit is connected to one of base stations of a mobile communication system. The optical transmission system exclusively used for the mobile communication system.

### SUMMARY OF THE INVENTION

It is an object of the present invention to provide a communication equipment having increased subscriber capacity and comprising plural radio access units connected to optical fibers used as basic transmission lines.

This object is achieved by a communication equipment as claimed in claim 1. Preferred embodiments of the invention are subject-matter of the dependent claims.

The first and second communication systems may be a mobile communication system and a wireless LAN communication system of different frequency bands. Alternatively, said first and second communication systems may be: a single-cell communication system in which said N radio access units are caused to function as a single cell corresponding to first input and output terminals; and a multi-cell communication system in which said N radio access units are caused to function as N multiple cells corresponding to N second input and output terminals.

As another alternative, said first communication system may be a system in which a single cell formed by said N radio access units is caused to operate K-fold corresponding to K input and output terminals, and said second communication system is a system in which the multiple cells formed by said N radio access units are caused to operate L-fold corresponding to the remaining L sets of input and output terminals, each set being composed of N and input output terminals.

Alternatively, said first and second communication systems may be K communication systems which are implemented by K-fold operations of a single cell formed by said N radio access units, said K being an integer equal to or greater than 2.

Even further alternatively, said first and second communication systems may be L communication systems which are implemented by L-fold operations of multiple cells formed by said N radio access units, said L being an integer equal to or greater than 2.

### BRIEF DESCRIPTION OF THE DRAWINGS

- Figure 1: is a diagram showing an example of the network configuration of a wireless LAN;
- Figure 2: is a block diagram depicting the configuration of a conventional communication equipment wherein radio access units are connected to optical fibers;
- Figure 3: is a block diagram illustrating the configuration of a communication equipment according to an embodiment of the present invention in which the wireless LAN system and the mobile communication system can be used;
- Figure 4: is a block diagram showing the configuration that permits connection of the wireless LAN system to the Internet in the Fig. 3 embodiment;
- Figure 5: is a block diagram showing the configuration that permits connection of the wireless LAN system to a mobile communication network in the Fig. 3 embodiment;
- Figure 6: is a block diagram showing the configuration for a down-link signal in an embodiment of the communication equipment according to the present invention on which single- and multi-cell communication systems are implemented;
- Figure 7: is a block diagram depicting the configuration for an up-link signal corresponding to the configuration of Fig. 6;
- Figure 8: is a diagram showing an example of the RF signal frequency set for each cell of a multi-cell communication system;
- Figure 9: is a block diagram illustrating an example of a divider/combiner unit;
- Figure 10: is a block diagram illustrating another example of the divider/combiner unit;
- Figure 11: is a block diagram illustrating still another example of the divider/combiner unit;
- Figure 12: is a block diagram showing the configuration for the down-link signal in a communication equipment adapted to be used as a plurality of single-cell communication systems and a plurality of multi-cell communication systems;
- Figure 13: is a block diagram showing the configuration for the up-link signal in the communication equipment of Fig. 12;
- Figure 14: is a block diagram showing the configuration for the down-link signal in a communication equipment adapted to be used as a plurality of single-cell communication systems;
- Figure 15: is a block diagram showing the configuration for the up-link signal in the communication equipment of Fig. 14;
- Figure 16: is a block diagram showing the configuration for the down-link signal in a communication equipment adapted to be used as a plurality of multi-cell communication systems; and
- Figure 17: is a block diagram showing the configuration for the up-link signal in the communication equipment of Fig. 16.

### DETAILED DESCRIPTION OF THE PREFERRED EMBODIMENTS

A detailed description will hereinafter be given, with reference to the accompanying drawings, of embodiments of the present invention.

### EMBODIMENT 1

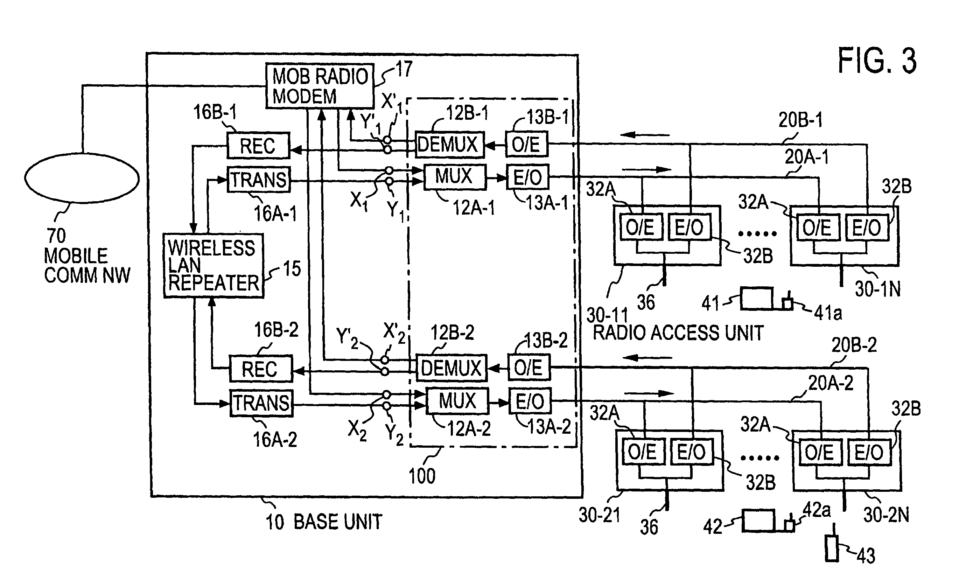

Figure 3 illustrates in block form a first embodiment of the present invention. According to this embodiment, in a divider/combiner unit 100, high-frequency signal of a mobile communication and a wireless LAN are multiplexed and then converted from electrical to optical form, thereafter being sent to radio access units over the same optical fiber; in this way, the mobile communication system and the wireless LAN system are implemented on the same communication equipment. This communication equipment has high cost -performance for the utilization of hybrid systems.

As depicted in Fig. 3, the communication equipment comprises: a center node (hereinafter referred to as a base unit) 10; radio access units 30-11 to 30-1N and 30-21 to 30-2N (hereinafter identified by 30); wireless LAN system terminals 41 and 42; radio channel access units 41a and 42a; a mobile terminal 43 connectable to a mobile communication network (which terminal will hereinafter be referred to as a mobile communication terminal): and optical fibers 20A-1, 20B-1, 20A-2 and 20B-2.

The base unit 10 is provided with: a wireless LAN repeater 15; a mobile radio modem 17; transmitters 16A-1, 16A-2; receivers 16B-1, 16B-2; multiplexers 12A-1, 12A-2; demultiplexers 12B-1, 12B-2; E/O converters 13A-1, 13A-2; and O/E converters 13B-1, 13B-2. The mobile radio modem 17 is connected to the demultiplexers 12B-1, 12B-2 and the multiplexers 12A-1, 12A-2. The multiplexers 12A-1, 12A-2, the demultiplexers 12B-1, 12B-2, the E/O converters 13A-1, 13A-2 and the O/E converters 13B-1, 13B-2 constitute the divider/combiner unit 100. The wireless LAN repeater 15, the transmitters 16A-1, 16A-2 and the receivers 16B-1, 16B-2 constitute wireless LAN repeater means.

Each radio access unit 30 has an O/E converter 32A and an E/O converter 32B. The wireless LAN system terminals 41, 42 and the mobile communication terminal 43 operate at different radio frequencies. For example, the radio frequency for the wireless LAN system terminals 41, 42 is in a 2.4 GHz band, the radio frequency for the mobile communication terminal 43 is in a 1.5 GHz band.

In Fig. 3, the RF signal to be sent from the wireless LAN system terminal 41 or mobile communication terminal 43 is converted to an optical signal in the radio access unit 30 and received by the base unit 10 via the optical fiber line. The base unit 10 separates the radio bands of the wireless LAN system terminal 41 and the mobile communication terminal 43, and relays the signal from the wireless LAN system terminal 41 via the LAN repeater 15 to the other wireless LAN system terminal 42. On the other hand, the signal from the mobile communication terminal 43 is demodulated by the mobile radio modem 17 as predetermined for transmission to the mobile communication network 70.

Next, a detailed description will be given of communication from the wireless LAN system terminal 42 to the other wireless LAN system terminal 41 in the communication equipment depicted in Fig. 3. The wireless LAN system terminal 42 radiates an RF signal (prescribed for the wireless LAN) out into space from the radio channel access unit 42a (for example, a wireless modem) connected to the terminal 42. The RF signal is received by an antenna 36 of the radio access unit 30 in the neighborhood of the wireless LAN system terminal 42. Let it be assumed in this case that the RF signal be received by the radio access unit 30-21.

Upon receiving the RF signal, the radio access unit 30-21 makes a gain adjustment to the received signal, and then provides it to the E/O converter 32B. The E/O converter 32B has a built-in semiconductor laser diode, and intensity-modulates the drive current of the semiconductor diode by the received RF signal for its conversion to an optical signal. The thus intensity-modulated optical signal is sent via the optical fiber 20B-2 to the divider/combiner unit 100. The divider/combiner unit 100 receives the optical signal by a photodiode of the O/E converter 13B-2 to convert it to an electric signal. Usually, the photodiode of the O/E converter 13B-2 receives optical signals over the optical fiber 20B-2 from the plurality of radio access units 30-21 to 30-2N.

The thus converted electric signal is separated by the demultiplxer 12B-2 into an RF signal of the mobile communication band and an RF signal of the wireless LAN band. For example, the mobile communication band is a 1.5 GHz band, and the wireless LAN band is a 2.4 or 5 GHz band. The demultiplxer 12B-2 can be formed by filters of different frequency characteristics. The demultiplxer 12B-2 provides the RF signal of the wireless LAN band from a terminal Y'₂ to the receiver 16B-2 and the RF signal of the mobile communication band from a terminal X'₂ to the mobile radio modem 17.

The receiver 16B-2 demodulates the RF signal received from the demultiplexer 12B-2, and then outputs the demodulated signal to the wireless LAN repeater 15. The wireless LAN repeater 15 has stored therein a predetermined wireless LAN protocol, and performs routing or like relay processing for connecting the demodulated signal to the destination wireless LAN system terminal (the wireless LAN system terminal 41) based on the source address information and destination address information read out from the header of a packet signal contained in the demodulated signal. As a result, the wireless LAN repeater 15 sends the signal, for example, to the transmitter 16A-1, wherein the signal is converted to an RF signal of the wireless LAN band, which is fed via a terminal Y₁ to the multiplexer 12A-1, wherein it is band-combined with an RF signal of the mobile communication band fed from the mobile radio modem 17 via a terminal X₁. The multiplexer 12A-1 can be formed by filters of different frequency characteristics.

The RF signal thus band-combined by the combiner 12A-1 is converted to an optical signal through intensity modulation by a semiconductor laser diode of the E/O converter 13-A. The optical signal is sent over the optical fiber 20A-1 to each of the radio access units 30-11 to 30-1N, wherein it is converted by the O/E converter 32A to an RF signal, which is radiated out into space from the antenna 36 of the radio access unit 30. The wireless LAN system terminal 41receives the RF signal by the radio channel access unit 41a, and after predetermined demodulation of the received signal, the terminal 41 can communicate with the wireless LAN system terminal 42.

Next, a description will be given of the procedure by which to carry out communications using the mobile communication terminal 43 in the communication equipment of Fig. 3. In Fig. 3, the RF signal sent from the mobile communication terminal 43 is received by the neighboring radio access unit 30. Assume in this instance that the RF signal be received by the radio access unit 30-21. The RF signal received by the radio access unit 30-21 is converted by the E/O converter 32B to an optical signal, which is transmitted over the optical fiber 20B-2 to the base unit 10.

The optical signal is converted by the O/E converter 13B-2 to an electric signal, which is fed into the demultiplexer 12B-2. The electric signal is separated by the demultiplexer 12B-2 into an RF signal of the mobile communication band and the wireless LAN band. The RF signal of the mobile communication band is input to the mobile communication modem 17, wherein it is demodulated as predetermined. On the other hand, the RF signal of the wireless LAN band is fed via the receiver 16B-2 to the wireless LAN repeater 15 as referred to previously.

The RF signal of the mobile communication band, demodulated by the mobile communication modem 17, is sent to the mobile communication network 70, wherein it is subjected to predetermined processing for connection to the destination mobile communication terminal, allowing the communication therewith of the source mobile communication terminal 43.

In such a communication equipment, for example, in the case where the radio access units 30-11 to 30-1N are installed on the first floor of a two-storied building, the radio access units 30-21 to 30-2N on the second floor and the base unit 10 at an arbitrary position, communications between the wireless LAN system terminals on the first and second floors are carried out via the wireless LAN repeater 15. Thus, a single wireless LAN can be implemented in the building; hence, a wireless LAN of a relatively large scale can be constructed.

Since this communication equipment enables the radio access unit 30 to simultaneously send the RF signal for the wireless LAN and the RF signal of the mobile communication, the mobile communication terminal can carry out communications with other mobile communication terminals via the wireless LAN system and via the mobile communication network 70.

In such a communication equipment, the base unit receives the RF signal of the wireless LAN and the RF signal of the mobile communication, then separates them into respective bands, and determines the destinations of the separated signals according to their frequency bands. That is, the base unit identifies the received RF signal, and when it is identified as the RF signal of the wireless LAN, the base unit performs relay processing for connection to the wireless LAN system terminal of the destination.

On the other hand, in the case of the RF signal of the mobile communication, the base unit performs processing for connection to the mobile communication terminal of the destination. Accordingly, the communication equipment of this embodiment permits implementation of communications between wireless LAN terminals and between mobile communication terminals.

As described above, according to the Fig. 3 embodiment, the communication equipment, which contains the divider/combiner unit 100, the optical fibers 20A, 20B, and the radio access unit 30-11 to 30-1N and 30-21 to 30-2N, operates as a communication equipment that can be connected to the mobile communication system via the pairs of terminals X₁, X'₁ and X₂, X'₂. Similarly, the communication equipment operates as a communication equipment that can be connected to the wireless LAN via the pair of terminals Y₁, Y'₁ and Y₂, Y'₂. Hence, the communication equipment of this embodiment has high cost-performance for utilization of hybrid systems regarding the wireless LAN and the mobile communications network.

### EMBODIMENT 2

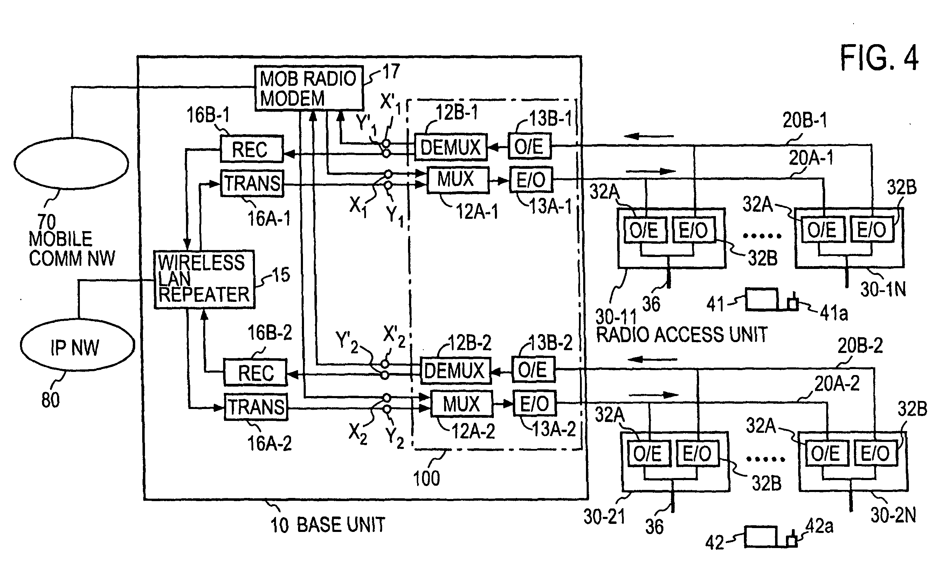

Figure 4 illustrates in block form a second embodiment of the communication equipment of the present invention. This embodiment is a modified form of the Fig. 3 embodiment, in which the wireless LAN system is adapted to be connectable to the Internet (an IP network). In the wireless LAN system in Fig. 4, the wireless LAN repeater 15 in the base unit 10 has a function of connection to an external communication network such, for example, as an IP network 80. This embodiment is exactly identical in construction with the Fig. 3 embodiment except the above.

That is, the incorporation of an Internet protocol in the wireless LAN repeater 15 enables the wireless LAN system terminal to be easily connected to the IP network, making it possible to receive communication services such as an access to the Internet and a file transfer. Accordingly, such a wireless LAN system offers a radio network environment equivalent to a wired one, hence providing increased mobility of users.

In the communication equipment of this embodiment the base unit performs external network connection processing for connecting the wireless LAN terminal to the IP network--this makes it possible, for example, to access the Internet or transfer files by radio from the wireless LAN system terminal.

### EMBODIMENT 3

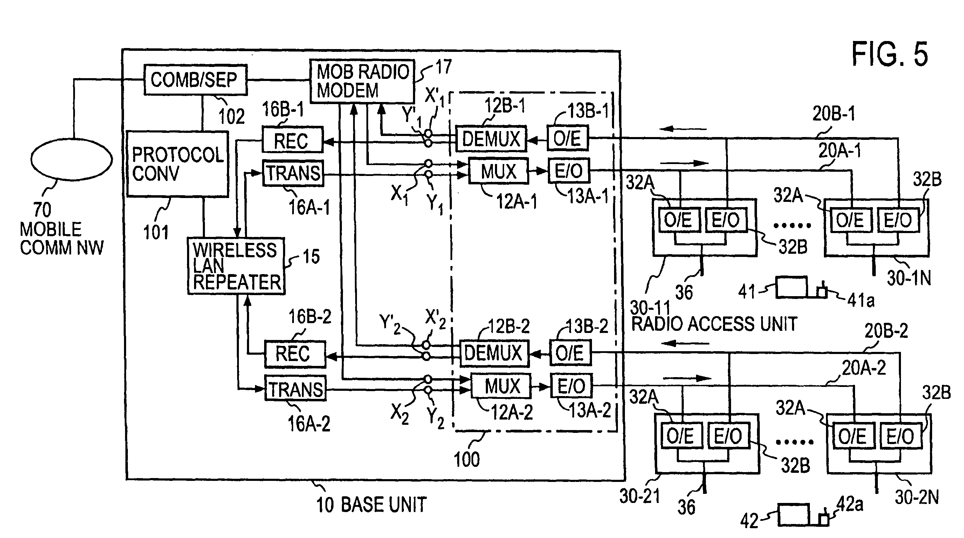

Figure 5 illustrates in block form a third embodiment of the communication equipment according to the present invention. This embodiment of another modified form of the Fig. 3 embodiment, in which the wireless LAN system is adapted to be connectable to the mobile communication network by protocol conversion. In the wireless LAN system of this embodiment the base unit 10 is further provided with a protocol converter 101 and a combiner/separator 102. Since the wireless LAN system and the mobile communication system use different communication protocols, the protocol converter 101 converts the communication protocol of the former to the communication protocol of that of the latter. The combiner/separator 102 combines the signal of the protocol converted by the protocol converter 101 with a signal from the mobile radio modem 17, then connects the combined signal to the mobile communication network 70.

And at the same time it separates the signal addressed to the wireless LAN repeater 15 from the mobile communication network 70. This embodiment is also exactly identical in construction with the Fig. 3 embodiment except the above.

A description will be given below of the procedure by which the wireless LAN system terminal communicates with the mobile communication terminal.

Upon receiving an RF signal from the wireless LAN system terminal 42 by the radio access unit 30, its E/O converter 32B converts the RF signal to an optical signal. The thus converted optical signal is transmitted over the optical fiber 20B-2 to the divider/combiner unit 100. The divider/combiner unit 100 converts the optical signal by the O/E converter 13B-2 to an electric signal, which is fed into the demultiplexer 12B-2.

The demultiplexer 12B-2separates the input electric signal into an RF signal of the wireless LAN radio band and an RF signal of the mobile communication radio band, and outputs the wireless LAN RF signal to the receiver 16B-2.

On the other hand, the receiver 16B-2 demodulates the wireless LAN RF signal, and provides the demodulated signal to the protocol converter 101 via the wireless LAN repeater 15. Based on protocol information contained in the demodulated signal, the protocol converter 101 converts the protocol of the wireless LAN to the protocol of the mobile communication network, and outputs the protocol-converted signal to the combiner/separator 102. The mobile radio modem 17 demodulates the mobile communication RF signal, and provides the demodulated signal to the combiner/separator 102.

The combiner/separator 102 multiplexes the protocol-converted signal from the protocol converter 101 and the demodulated signal from the mobile radio modem 17. In this case, if the network to be connected is a packet communication network, the multiplexed signal is connected intact thereto. The wireless LAN and mobile communication packets can be discriminated on the part of the packet network by containing packet identification information in the packet header.

When the network to be connected is a circuit switching network, a particular slot is assigned to the wireless LAN for connection. The signal thus multiplexed in the combiner/separator 10 is used in the packet network or circuit switching network in the mobile communication network 70 for connection to the destination mobile communication terminal. Upon completion of a sequence of connection processes in the mobile communication network 70, a connection is established between the source wireless LAN system terminal and the destination mobile communication terminal, allowing voice and data communications between them.

In this wireless LAN system, since the protocol converter 101 of the base unit 10 converts the protocol of the wireless LAN to the protocol of the mobile communication network, a communication can be carried out from the wireless LAN system terminal to the mobile communication terminal. As a result, the wireless LAN network and the mobile communication network can be handled apparently as a single network, that is, as a seamless network. Hence, users are allowed to receive, in addition to services offered by the wireless LAN system, a wide variety of services provided by the mobile communication network, for example, i-mode services in Japan. Further, by incorporating in the protocol converter 101 a function of converting the mobile communication network protocol to the wireless LAN protocol, it is possible to carry out a communication from the mobile communication terminal to the wireless LAN system terminal.

For example, in Fig. 5, a signal sent from the mobile communication terminal is input to the combiner/separator 102 of the base unit 10 via the mobile communication network 70. In the base unit 10 a signal to the wireless LAN is separated from the signal sent from the mobile communication network. That is, control information concerning the communication protocol and data information are separated. The control information associated with the communication protocol contains control information for communication and information like source and destination addresses.

In the protocol converter 101, the protocol information contained in the control information separated by the combiner/separator 102, in this case, the mobile communication protocol, is converted to the wireless LAN protocol, and the converted information is input to the wireless LAN repeater 15. On the other hand, the data information separated by the combiner/separator 102 is subjected to predetermined demodulation processing by the mobile radio modem 17.

The thus protocol-converted control information is modulated by the transmitters 16A-1 and 16A-2 and then input therefrom to the multiplexers 12A-1 and 12A-2 via terminals Y₁ and Y₂, respectively. The multiplexers 12A-1 and 12A-2 each multiplex the information demodulated by the mobile radio modem 17 and the protocol-converted control information. The multiplexed electric signals are converted by the E/O converters 13A-1 and 13A-2 into optical signals, which are sent over the optical fibers 21A-1 and 20A-2 to the radio access units 30-11 to 30-1N and 30-21 to 3-2N. The radio access units 30-11 to 30-1N and 30-21 to 30-2N each convert the optical signal into an RF signal, and radiate it out into space from the antenna 36.

When RF signals are radiated from the radio access units 30-21 to 30-1N and 30-21 to 30-2N, the destination wireless LAN terminal performs processing for connection to the neighboring radio access unit to establish a communication with the source terminal.

In such a wireless LAN system, since the wireless LAN system described above uses the protocol converter 101 to convert the mobile communication protocol to the wireless LAN protocol and vice versa, communications can be carried out from the mobile communication terminal to the wireless LAN system terminal and vice versa. That is, in this communication equipment wherein he protocol conversion is performed by the protocol converter 101 between the wireless LAN communication the mobile communication system, the wireless LAN system and a mobile communication system, for example, a PDC (Personal Digital Cellular) or CDMA (Code Division Multiple Access) mobile communication system, can be handled as a single network apparently as if they are connected to each other. Accordingly, the wireless LAN system and the mobile communication system can be used as a seamless network.

### EMBODIMENT 4

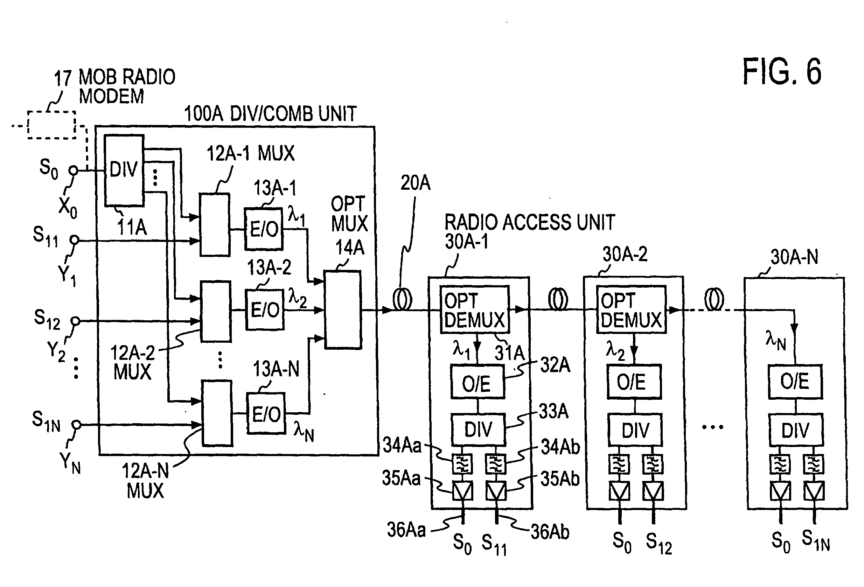

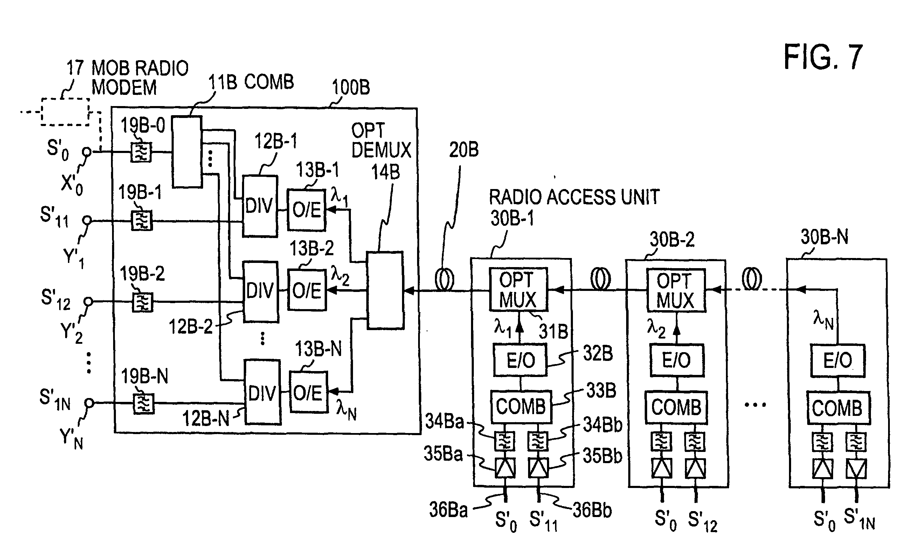

Figures 6 and 7 illustrate in block form a fourth embodiment of the communication equipment according to the present invention. With a view to providing increased cost-performance of the communication equipment, this embodiment is adapted to be usable as a multi-cell structure which allows individual access to N cells assigned to N radio access units and as a single-cell structure which covers the N cells and is accessible in common to the N cells.

Figure 6 depicts only the configuration for the down-link signal in the communication equipment, and Fig. 7 the configuration for the up-link signal. These configurations are formed integrally with each other as shown in the embodiments of Figs. 3, 4 and 5.

In Fig. 6, reference character S₀ denotes a down-link RF signal of radio system of the single-cell structure. The down-link RF signal is sent to all the radio access units 30A-1 to 30A-N, from which it is ultimately transmitted as an RF signal. The frequency band of the RF signal S₀ will be identified by F₀. Incidentally, the sets of radio access units 30A-1 to 30A-N and the corresponding radio access units 30B-1 to 30B-N in Fig. 7 correspond to the radio access units 30-11 to 30-1N and 30-21 to 30-2N in Figs. 3, 4 and 5.

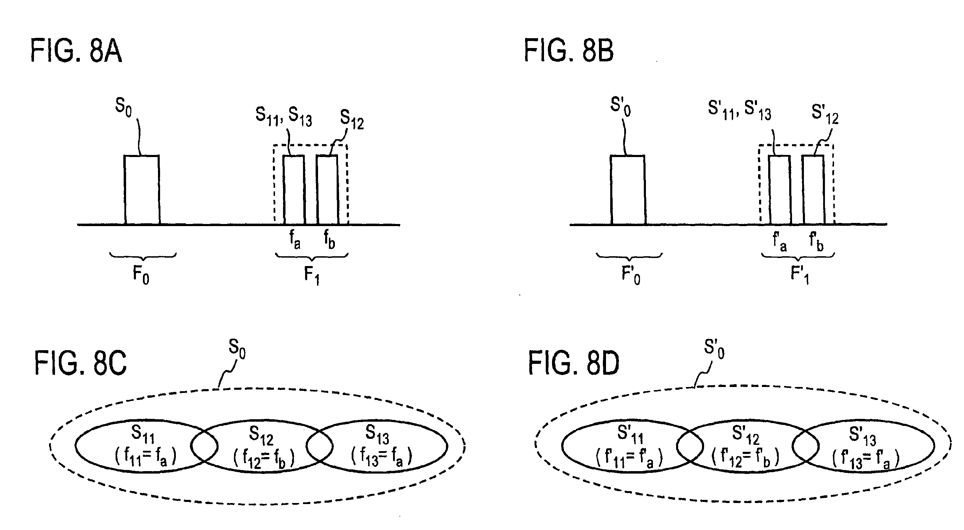

Signals S₁₁, S₁₂, ..., S_{1N} are down-link RF signal of the multi-cell structure radio system. The RF signal S₁ᵢ is sent only to the radio access unit 30A-i (where i=1, 2, ..., N), from which it is ultimately transmitted as an RF signal. The frequency band for all of the signals S₁₁ to S_{1N} will be identified by F₁; this frequency band differs from the frequency band F₀. The frequency of each of the signals S₁₁ to S_{1N} will be denoted by f₁ᵢ, and its concrete value is determined by design specifications such as the position of placement of the radio access unit (cell) and the frequency reuse. For example, when the number N of radio access units is 3, the frequency bands of the signals S₁₁ to S₁₃ are set as shown in Figs. 8A or 8C. That is, the frequency bands are set such that f₁₁=f₁₃=fₐ and f₁₂=f_{b} in the three cells. The signals S₁₁ and S₁₃ repeatedly use the same frequency band fₐ, but differ in their transmitting information.

In the divider/combiner unit 100A the signal S₀ is divided by a divider 11A into N signals. N multiplexers 12A-1 to 12A-N multiplex the signals S₁₁ to S_{1N} and the divided signals S₀ from the divider 11A, respectively. The output signals from the multiplexers 12A-1 to 12A-N are converted by E/O converters 13A-1 to 13A-N into optical signals of different wavelengths λ₁ to λ_{N}. The optical wavelength of the output optical signal from the E/O converter 13A-i is λᵢ. The N optical signals are multiplexed by an optical multiplexer 14A, and the multiplexed output is provided onto an optical fiber 20A.

In the radio access unit 30A-i, the optical signal on the optical fiber 20A is applied to an optical demultiplexer 31A inserted in the optical fiber 20A, by which the optical signal of the wavelength λᵢ is extracted. The optical signals of the other optical wavelengths pass through the optical demultiplexer 31A and propagate in the optical fiber 20A to the next radio access unit 30A-(i+1). The optical signal of the wavelength λᵢ is converted by an O/E converter 32A to an electric signal. The electric signal is divided by a divider 33A into two. The one output signal from the divider 33A is filtered by a filter 34Aa that permits the passage therethrough of only a signal of the frequency band F₀, and as a result, the signal S₀ is provided from the filter 34Aa. This signal is amplified by an amplifier 35Aa, and then radiated out as the RF signal S₀ into space from a first antenna 36Aa. The other output signal from the divider 33A is filtered by a filter 34Ab that permits the passage therethrough of only a signal of the frequency band F₁. For example, in the radio access unit 30A-1, the filter 34Ab outputs the signal S₁₁. (Generally speaking, in the radio access unit 30A-i, this output signal is S₁ᵢ.) The signal is amplified by an amplifier 35Ab, and then radiated out as the RF signal S₁₁ into space from a second antenna 36Ab.

Figure 7 depicts the configuration for the up-link signal, which corresponds to the configuration for the down-link signal shown in Fig. 6. Reference character S'₀ denotes an up-link RF signal of a single-cell radio system, which is sent from a radio terminal of a single-cell radio system. The frequency band of the signal S'₀ is denoted by F'₀. Reference characters S'₁₁, S'₁₂, ..., S'_{1N} denote up-link RF signals of a multi-cell radio system, which are each sent from radio terminal of a multi-cell radio system in the vicinity of an i-th radio access unit. The frequency band for all of the signals S'₁₁ to S'_{1N} will be denoted by F'₁; this frequency band differs from the frequency band F'₀. The frequency band of each of the signals S'₁₁ to S'_{1N} will be denoted by f'₁ᵢ, and its concrete value is determined by design specifications such as the position of placement of the radio access unit (cell) and the frequency reuse as mentioned previously. Figures 8B and 8D show an example of the setting of the frequency band f'₁ᵢ. In this example, when the number N of radio access units is 3, the frequency bands of the signals S'₁₁ to S'₁₃ are set as shown in Figs. 8A or 8C. That is, the frequency bands are set such that f'₁₁=f'₁₃=f'ₐ and f'₁₂=f'_{b} in the three cells. The signals S'₁₁ and S'₁₃ repeatedly use the same frequency band f'ₐ, but differ in their transmitting information.

In a radio access unit 30B-i, an antenna 36Ba capable of receiving an RF signal of the frequency band F'₀ receives the above-mentioned signal S'₀, and an antenna 36Bb capable of receiving an RF signal of the frequency band F'₁ receives the above-mentioned signal S'₁ᵢ.

The RF signal received by the antenna 36Ba is amplified by an amplifier 35Ba, and the amplified signal is filtered by a filter 34Ba that permits the passage therethrough of a signal of the frequency band F'₀. The RF signal received by the antenna 36Bb is amplified by an amplifier 35Bb, and the amplified signal is filtered by a filter 34Bb that permits the passage therethrough of a signal of the frequency band F'₁. The output signals from the filters 34Ba and 34Bb are combined by a combiner 33B. The thus combined electric signal is converted by an E/O converter 32B into an optical signal of an optical wavelength λᵢ. The optical signal is provided via an optical multiplexer 31B to an optical fiber 20B.

In a divider/combiner unit 100B the optical signal from the optical fiber 20B is composed of optical signals of optical wavelengths λ₁ to λ_{N}. These optical signals are demultiplexed by an optical demultiplexer 14B. The optical signals are converted by O/E converters 13B-1 to 13B-N into electric signals. The electric signals are each divided by one of dividers 12B-1 to 12B-N into two signals. The one output signal from each of the dividers 12B-1 to 12B-N is provided to a combiner 11B, by which the output signals are combined into one electric signal. The up-link RF signal S'₀ is extracted from the thus combined signal by a filter 19B-0 that permits the passage therethrough of a signal of the frequency band F'₀ alone. The up-link RF signals S'₁₁ to S'_{1N} of the frequency band F'₁ are extracted from the other output signals from the dividers 12B-1 to 12B-N by filters 19B-1 to 19B-N that permit the passage therethrough of signals of only the frequency band F'₁.

In the divider/combiner unit 100B the output signal S'₁₁ from the filter 19B-i becomes an up-link RF signal from the i-th radio access unit 30B-i. When cells of adjacent radio access units are designed to partly overlap, a transmission signal from a radio terminal in the overlapping area is received by radio access units in the both cells. In this instance, there is the possibility that the antenna 36Bb of the i-th radio access unit receives the signal S'₁ᵢ and, at the same time, receives a signal, for example, S'₁ᵢ₊₁ (In this instance, the two signals differ in frequency since the radio terminals having sent them belong to different cells; that is, f'₁ᵢ≠f'₁ᵢ₊₁). Usually, the two RF signals cannot be separated by the RF-band filters 34Bb and19B-i, and consequently, the signals S'₁ᵢ and S'₁ᵢ₊₁ are both output from the filter 19B-i in the divider/combiner unit 100B. When the desired signal in this output is only the up-link RF signal from the radio terminal to which the cell itself of the i-th radio access unit belongs, the signal S'₁ᵢ₊₁ is unnecessary. In general, the frequency band of the RF signal output from the filter 19B-i is converted to the base band when it is demodulated. In the base band the signals S'₁ᵢ and S'₁ᵢ₊₁ can easily be separated. Accordingly, the signal S'₁ᵢ₊₁ in the output from the filter 19B-i does not matter.

In the optical fiber transmission system described above with reference to Figs. 6 and 7, the single-cell structure using the frequency band F₀ of the signal S₀ and the multi-cell structure using the frequency bands f₁₁ to f_{1N} of the signals S₁₁ to S_{1N} each form one system, but they can easily be extended to multiple systems. That is, down-link RF signals of all single-cell radio systems are combined with the down-link signal in fig. 6, and the combined signal is input to the divider 11A.

Further, down-link RF signals of plural multi-cell radio systems are combined with signals to be sent to the same radio access units, and the combined signals are input to the multiplexers 12A-1 to 12AN. On the other hand, in each radio access unit the dividing number of the divider 33A is set equal to the number of radio systems, and the respective output signals from the divider 33A are filtered and amplified, thereafter being sent to respective transmitting antennas.

Similarly, in each radio access unit in Fig. 7, antennas are provided for receiving up-link RF signals of plural radio systems, and their received signals are amplified and filtered, thereafter being combined. In the base unit, the output signal from the combiner 11B is divided into the same number as that of the single-cell radio systems, and the divided outputs are applied to proper filters to extract up-link RF signals of the respective radio systems. Further, the output from each of the filters 19B-1 to 19B-N is divided into the same number as that of the multi-cell radio systems, and the respective divided outputs are applied to proper filters to extract up-link RF signals of the respective systems.

In the embodiment shown in Figs. 6 and 7, the communication equipment, which contains the divider/combiner units 100A, 100B, the optical fibers 20A, 20B and the radio access units 30A-1 to 30A-N and 30B-1 to 30B-N, operates as a single-cell communication system with respect to the pair of terminals X₀ and X'₀. Further, this communication equipment is capable of operating as a multi-cell communication cell with respect to the sets of terminals Y₁ to Y_{N} and Y'₁ to Y'_{N} as well. Hence, this communication equipment has high cost -performance for the utilization of hybrid systems.

In the embodiment of Figs. 6 and 7, the terminals in the communication equipment of the present invention can be connected, as in the embodiments of Figs. 3, 4 and 5, to the mobile communication network 70, via the mobile communication modem 17 connected to the terminals X₀ and X'₀ as indicated by the broken lines. Further, to construct a wireless LAN system according to the embodiment of Figs. 6 and7, N transmitters 16A and N receivers 16B connected to the wireless LAN repeater 15 in the embodiments Figs. 3, 4 and 5 are provided, the outputs of the N transmitters 16A are connected to the N input terminals Y₁ to Y_{N} in Fig. 6, respectively, and the N output terminals Y'₁ to Y'_{N} in Fig. 7 are connected to the inputs of the N receivers 16B, respectively. Moreover, the communication equipment can be adapted for connection to the IP network as in the case of Fig. 4, and it can also be adapted so that the wireless LAN system can be connected via the combiner/separator 102 by the use of the protocol converter 102 as shown in Fig. 5. These modifications are applicable as well to the embodiment described hereafter.

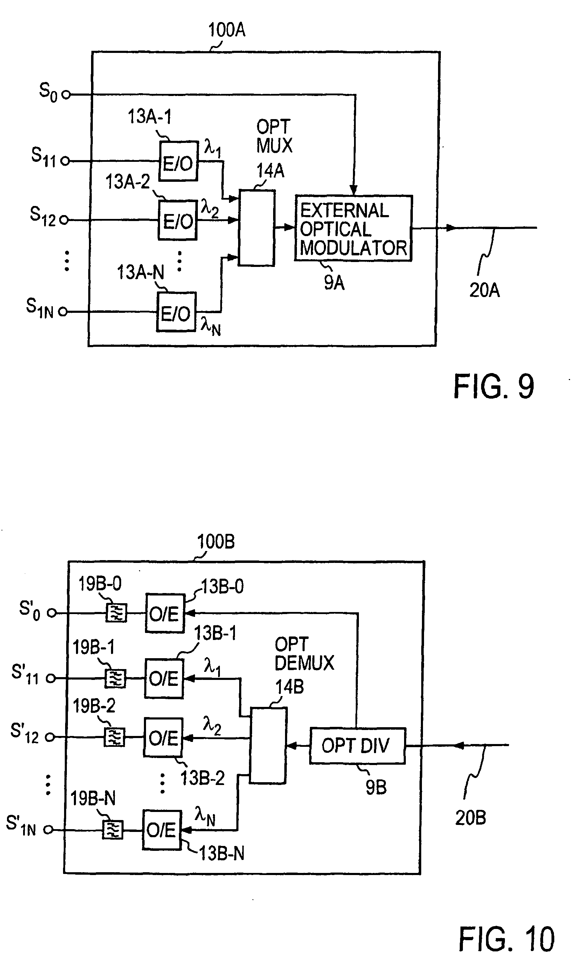

Figure 9 illustrates a modified form of the divider/combiner unit 100A used in the Fig. 6 embodiment. In the divider/combiner unit 100A the down-link RF signals S₁₁, S₁₂, ..., S_{1N} of the multi-cell radio system are converted by the E/O converters 13A-1 to 13A-N into optical signals. The wavelength of the optical signal corresponding to the RF signal S₁ᵢ is λᵢ. These optical signals are multiplexed by the optical multiplexer 14A. The thus multiplexed optical signal is input to an external optical modulator 9A, wherein it is intensity modulated by the down-link RF signal S₀ of the single-cell radio system, and the intensity-modulated signal is provided on the optical fiber 20A. Since the optical signals of different optical wavelength are simultaneously intensity modulated by the RF signal S₀ in the external optical modulator 9A, information of the signal S₀ is modulated into the optical signals of all the wavelengths.

Figure 10 illustrates a modified form of the divider/combiner unit 100B in Fig. 7, which corresponds to the Fig. 9 modification.

The optical signal from the optical fiber 20B contains optical signals of different optical wavelengths sent from respective radio access units. In the divider/combiner unit 100B the optical signal is divided by an optical divider 9B into two optical signals. The one output from the optical divider 9B is converted by an O/E converter 13B-0 into an electric signal. The up-link RF signal S'₀ is extracted from the electric signal by the filter 19B-0 that permits the passage therethrough of a signal of the frequency band F'₀ alone. The other output from the optical divider 9B is demultiplexed by an optical demultiplexer 14B. The demultiplexed optical signals of the respective wavelengths are converted by the O/E converters 13B-1 to 13B-N into electric signals. From these electric signals are derived the up-link RF signals of the frequency band F'₁ by the filters 19B-1 to 19B-N that permits the passage therethrough of signals of the frequency band F'₁ alone. The output signal from the filter 19B-i becomes the up-link RF signal from the i-th radio access unit.

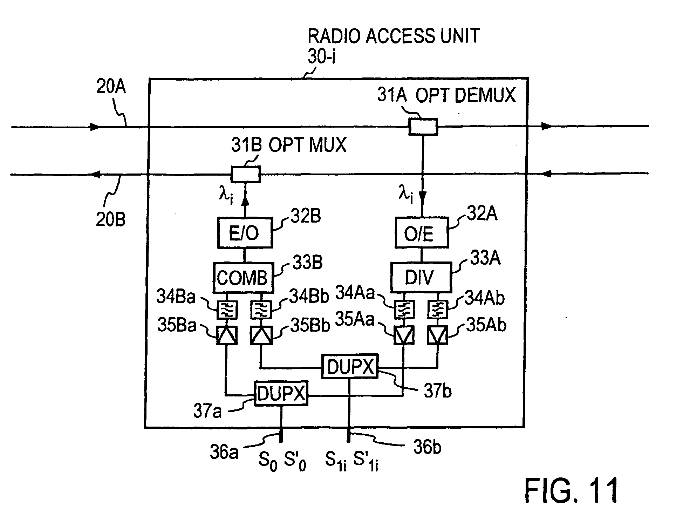

Figure 11 illustrates another modified form of the divider/combiner units 100A and 100B in the embodiments of Figs. 6 and 7.

In the down-link, in the radio access unit 30-i the optical signal from the down-link optical fiber 20A is input to the optical demultiplexer 31A inserted in the down-link optical fiber 20A, by which the optical signal of the wavelength λᵢ is extracted from the input optical signal. The optical signal of the wavelength λᵢ converted by the O/E converter 32A into an electric signal, which is divided by the divider 33A into two. The one output signal from the divider 33A is filtered by the filter 34Aa through which only signals of the frequency band F₀ are allowed to pass, and from which the RF signal S₀ is provided. The RF signal F₀ is amplified by the amplifier 35Aa, and then sent via a duplexer 37a to an antenna 36a, from which it is radiated out as a down-link RF signal into space. The other output signal from the divider 33A is filtered by the filter 34Ab that permits the passage therethrough of only signals of the frequency band F₁, and the signal S₁ᵢ is output from the filter 34Ab. The signal S₁ᵢ is amplified by the amplifier 35Ab and provided via a duplexer 37b to an antenna 36b, from which it is radiated out as an RF signal into space.

In the up-link, the radio access unit 30-i receives the signal S'₀ by an antenna 36a capable of RF signals of the frequency band F'₀ and the signal F'₁ᵢ by an antenna 36b capable of receiving RF signals of the frequency band F'₁. The up-link RF signal S'₀ received by the antenna 36a is provided via the duplexer 37a to the amplifier 35Ba, by which it is amplified, and the amplified signal is filtered by the filter 34Ba that permits the passage therethrough of signals of the frequency band F'₀. The up-link RF signal F'₁ᵢ received by the antenna 36b is provided via the duplexer 37b to the amplifier 35Bb, by which it is amplified, and the amplified signal is filtered by the filter 34Bb that permits the passage therethrough of only signals of the frequency band F'₁. The output signals from the filters 34Ba and 34Bb are combined by the combiner 33B. The thus combined electric signal is converted by the E/O converter 32B into an optical signal of the optical wavelength λᵢ. The optical signal is provided via the optical multiplexer 31B to the up-link optical fiber 20B.

### EMBODIMENT 5

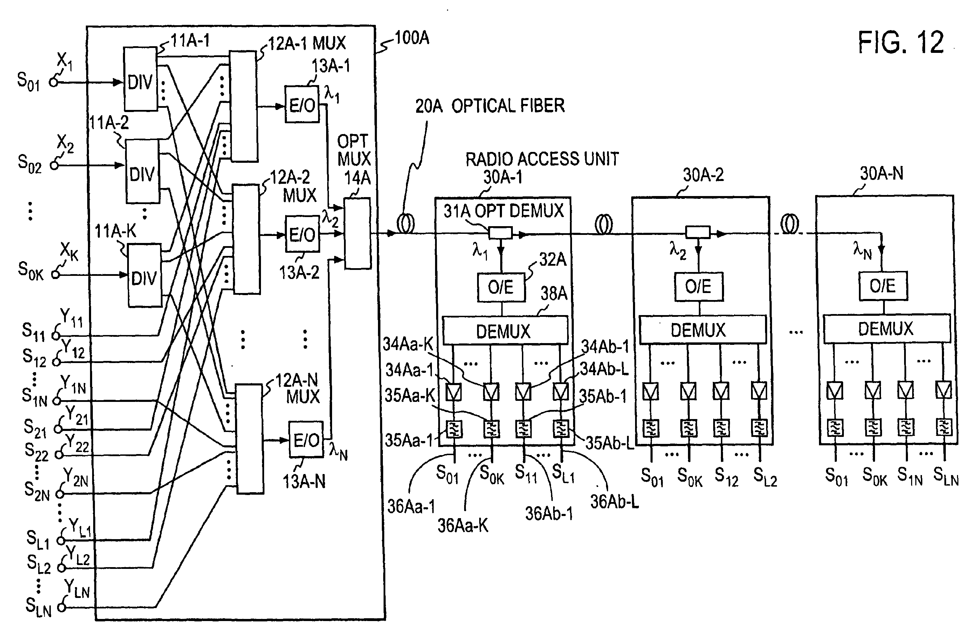

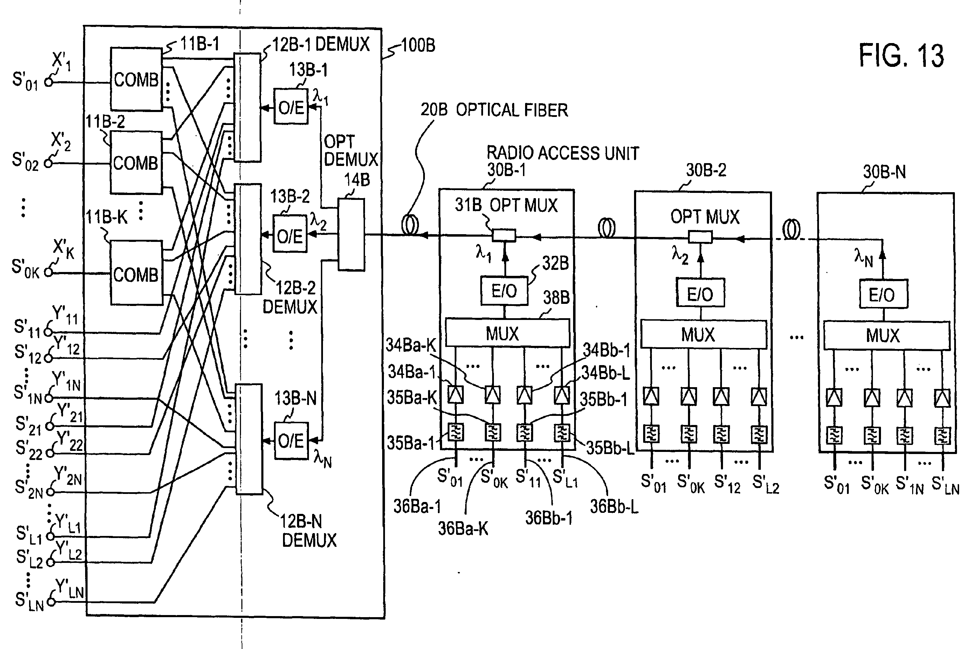

Figures 12 and 13 illustrate in block form a fifth embodiment of the present invention. With a view to further increasing its cost-performance the communication equipment of this embodiment is adapted to be usable as plural independent multi-cell communication systems and plural independent single-cell communication systems.

Figure 12 depicts plural single-cell radio systems and plural multi-cell radio systems for down-link signals. In Fig. 12, signals S₀₁, S₀₂, ..., S_{0K} are down-link RF signals of K (where K is an integer equal to or greater than 1) single-cell radio systems, respectively. The RF signals are ultimately provided to all the radio access units 30A-1 to 30A-N, for which they are transmitted as RF signals. The frequency bands of the RF signals S₀₁, S₀₂, ..., S_{0K} will be identified by F_{A-1}, F_{A-2}, ..., F_{A-K}, respectively. The frequency bands F_{A-1}, F_{A-2}, ..., F_{A-K}, are sufficiently spaced apart. Signals {S₁₁, S₁₂, ..., S_{1N}}, {S₂₁, S₂₂, ..., S_{2N}}, ..., {S_{L1}, S_{L2}, ..., S_{LN}} are down-link RF signal sequences of L (where L is an integer equal to or greater than 1) multi-cell radio systems. The RF signal sequences each contain N (where N is an integer equal to or greater than 1) signals.

The signal Sⱼᵢ (where j=1,2,...,L and i=1,2,...,N) is a signal that is sent only to an i-th radio access unit 30A-i of a j-th multi-cell radio system. This signal is ultimately transmitted as an RF signal from the radio access unit30A-i. The frequency bands of the RF signal sequences will be identified by F_{B-1}, F_{B-2}, ..., F_{B-L}, and the frequency bands are sufficiently spaced apart and also sufficiently spaced apart from the frequency bands F_{A-1}, F_{A-2}, ..., F_{A-K}. Letting the frequency band of the signal Sⱼᵢ be represented by Fⱼ₋ᵢ, the frequency bands Fⱼ₋₁, Fⱼ₋₂, ..., F_{j-N} are included in the frequency band F_{B-j}; these frequency bands will hereinafter be referred to as plural frequency channels belonging to the frequency band F_{B-j}. The frequency bands Fⱼ₋₁, Fⱼ₋₂, ..., F_{j-N} are arranged adjacently within the frequency band F_{B-j}.

This embodiment uses K dividers 11A-1 to 11A-K each identical with that in Fig. 6. N divided outputs from each divider 11A are input to the N multiplexers 12A-1 to 12A-N. L groups of multi-cell input terminals are provided; each group is identical with that in Fig. 6. N terminals of each group are connected to the N multiplexers 12A-1 to 12A-N, respectively. That is, the divider/combiner unit 100A comprises K dividers 11A-1 to 11AN, the N multiplexers 12A-1 to 12A-N, the N E/O converters 13A-1 to 13A-N, and the optical multiplexer 14A. Each combiner 12A-i (where i=1,2,...,N) multiplexes (K+L) RF signals of the frequency bands F_{A-1}, F_{A-2}, ..., F_{A-K} and F_{B-1}, F_{B-2}, ..., F_{B-L}, and provides the multiplexed signal to the E/O converter 13A-i.

Each radio access unit 30A-i (where i=1,2,...,N) comprises the optical demultiplexer 31A, the O/E converter 32A, the demultiplexer 38A, (K+L) amplifiers 34Aa-1 to 34Aa-K and 34Ab-1 to 34Ab-L, (K+L) filters 35Aa-1 to 35Aa-K and 35Ab-1 to 35Ab-L, and (K+L) antennas 36Aa-1 to 36Aa-K and 36Ab-1 to 36Ab-L.

In the divider/combiner unit 100A, the input RF signal S₀ₘ (where m=1,2,...,K) is divided by the divider 11A-m into N signals. The first to N-th outputs of the divider 11A-m are connected to m-th input ports of the N multiplexers 12A-1 to 12A-N. On the other hand, each RF signal Sⱼᵢ (where i=1,2,...,N) in the RF signal sequence {Sⱼ₁, Sⱼ₂, ..., S_{jN}} (where j=1,2,...,L) is connected to a (K+j)-th input port of the i-th multiplexer 12A-i. The output electric signals from the multiplexers 12A-1 to 12A-N are converted by the E/O converters 13A-1 to 13A-N into optical signals of different wavelengths λ₁, λ₂, ..., λ_{N}. The N optical signals from the E/O converters 13A-1 to 13A-N are multiplexed by the optical multiplexer 14A, from which the multiplexed output is provided on the optical fiber 20A.

In the radio access unit 30A-i (where i=1,2,...,N) the optical demultiplexer 31A connected to the optical fiber 20A extracts the optical signal of the wavelength λᵢ. The optical signals of the other remaining wavelength pass through the optical demultiplexer 31A and propagate to the next radio access unit 30A-(i+1). The optical signal of the wavelength λᵢ is converted by the O/E converter 32A into an electric signal. The electric signal is demultiplexed by the demultiplexer 38A to signals S₀₁, S₀₂, ..., S_{0K} and S_{1i,} S₂ᵢ, ..., S_{Li}. The RF signals S₀₁, S₀₂, ..., S_{0K} are amplified by the amplifiers 34Aa-1 to 34Aa-K, and filtered by the band-pass filters 35Aa-1 to 35Aa-K, thereafter being radiated out as RF signals into space from the antennas 36Aa-1 to 36Aa-K. The signals S₁ᵢ, S₂ᵢ, ..., S_{Li} are amplified by the amplifiers 34Ab-1 to 34Ab-L and filtered by the band-pass filters 35Ab-1 to 35Ab-L, thereafter being radiated out as RF signals into space from the antennas 36Ab-1 to 36Ab-L.

Figure 13 illustrates an example of a radio system for up-link signals corresponding to the Fig. 12 system for down-link signals. In Fig. 13, signals S'₀₁, S'₀₂, ..., S'_{0K} are up-link RF signals of K (where K is an integer equal to or greater than 1) single-cell radio systems, respectively. The RF signals are sent from radio terminals of the single-cell radio systems. The frequency bands of the RF signals S'₀₁, S'₀₂, ..., S'_{0K} will be identified by F'_{A-1}, F'_{A-2}, ..., F'_{A-K}, respectively. The frequency bands F'_{A-1}, F'_{A-2}, ..., F'_{A-K} are sufficiently spaced apart. Signals {S'₁₁, S'₁₂, ..., S'_{1N}}, {S'₂₁, S'₂₂, ..., S'_{2N}}, ..., {S'_{L1}, S'_{L2}, ..., S'_{LN}} are up-link RF signal sequences of L (where L is an integer equal to or greater than 1) multi-cell radio systems. The RF signal sequences each contain N (where N is an integer equal to or greater than 1) signals.

The signal S'ⱼᵢ (where j=1,2,...,L and i=1,2,...,N) is sent from that radio terminal of a j-th multi-cell radio system which is disposed near an i-th radio access unit 30B-i of the radio system. The frequency bands of the RF signal sequences will be identified by F'_{B-1}, F'_{B-2}, ..., F'_{B-L}, and the frequency bands are sufficiently spaced apart and also sufficiently spaced apart from the frequency bands F'_{A-1}, F'_{A-2}, ..., F'_{A-K}. Letting the frequency band of the signal S'ⱼᵢ be represented by F'ⱼ₋ᵢ the frequency bands F'ⱼ₋₁, F'ⱼ₋₂, ..., F'_{j-N} are included in the frequency band F'_{B-j}; these frequency bands will hereinafter be referred to as plural frequency channels belonging to the frequency band F'_{B-j}. The frequency bands F'ⱼ₋₁, F'ⱼ₋₂, ..., F'_{j-N} are arranged adjacently within the frequency band F'_{B-j}.

The divider/combiner unit 100B comprises K combiners 11B-1 to 11B-K, N demultiplexers 12B-a to 12B-N, N O/E converters 13B-1 to 13B-N and the optical demultiplexer 14B. An i-th demultiplexer 12B-i (I=1,2,...,N) demultiplexes its input signal to (K+L) RF signals of the frequency bands F'_{A-1}, F'_{A-2}, ..., F'_{A-K} and F'_{B-1}, F'_{B-2}, ..., F'_{B-L}, and provides the RF signals F'_{A-1}, F'_{A-2}, ..., F'_{A-K} to I-th ports of the K combiners 11B-1 to 11B-K and the RF signals F'_{B-1}, F'_{B-2}, ..., F'_{B-L} to L terminals Y'₁ᵢ, Y'₂ᵢ, ..., Y'_{Li}. Each combiner 11B-m (where m=1,2,...,K) is supplied with signals from m-th output ports of the N demultiplexers 12B-1 to 12B-N, and combines them and provides the combined output to a terminal X'ₘ.

Each radio access unit 30B-i (where i=1,2,..,N) comprises the optical multiplexer 31B, the E/O converter 32B, the multiplexer 38B, (K+L) amplifiers 34Ba-1 to 34Ba-K and 34Bb-1 to 34Bb-L, (K+L) band-pass filters 35Ba-1 to 35Ba-K and 35Bb-1 to 35Bb-L, and (K+L) antennas 36Ba-1 to 36Ba-K and 36Bb-1 to 36Bb-L. The multiplexer 38B multiplexes (K+L) RF signals of the frequency bands F'_{A-1}, F'_{A-2}, ..., F'_{A-K} and F'_{B-1}, F'_{B-2}, ..., F'_{B-L}.

In each radio access unit 30B-i (where i=1,2,..,N), the antennas 36ba-1 to 36Ba-K and 36Bb-1 to 36BBb-L, whose receiving frequency bands are F'_{A-1}, F'_{A-2}, ..., F'_{A-K} and F'_{B-1}, F'_{B-2}, ..., F'_{B-L}, receive the RF signals S'₀₁, S'₀₂, ..., S'_{0K} and S'₁ᵢ, S'₂ᵢ, ..., S'_{Li}. These received signals are filtered by the filters 35Ba-1 to 35Ba-K and 35Bb-1 to 35Bb-L, and amplified by the amplifiers 34Ba-1 to 34Ba-K and 34Bb-1 to 34Bb-L. The amplified signals are multiplexed by the multiplexer 38B into one electric signal. The thus multiplexed electric signal is converted by the E/O converter 32B into an optical signal of the wavelength λᵢ. The optical signal is provided via the optical multiplexer 31B to the optical fiber 20B.

In the divider/combiner unit 100B, the optical signal from the optical fiber 20B is demultiplexed by the optical demultiplexer 14B into optical signals of the wavelengths λ₁ to λ_{N}. Of these optical signals, the optical signal of the wavelength λᵢ (where i=1,2,..,N) is converted by the O/E converter 13B-i into an electric signal, which is demultiplexed by the demultiplexer 12B-i into signals of respective frequency bands. Since the optical signal of the wavelength λ₁ sent from the corresponding radio access unit 30B-i, the (K+L) output signals from the corresponding demultiplexer 12Bi are the RF signals S'₀₁, S'₀₂, ..., S'_{0K} and S'₁ᵢ, S'₂ᵢ, ..., S'_{Li}. The demultiplexer 12B-i sequentially outputs the signals S'₀₁ to S'_{0K} from its first to K-th output ports and the signals S'₁ᵢ to S'_{Li} from its (K+1)th to (K+L)-th output ports.

The N output signals from the m-th (where m=1,2,...,K) output ports of the demultiplexer 12B-1 to 12B-N are combined by the combiner 11B-m into one electric signal. This electric signal becomes a composite signal of up-link RF signals S'ₘ from all the radio access units 30B-1 to 30B-N. On the other hand, by collecting N output signals from j-th (where j=K+1, K+2, ..., K+L) output ports of the demultiplexer 12B-1 to 12B-N, N up-link RF signals S'_{(j-K),1}, S'_{(j-K),2}, ..., S'_{(j-K),N} of a (j-K)-th multi-cell radio system can be obtained.

As described above, according to the embodiments of Figs. 12 and 13, the communication equipment, comprised of the divider/combiner units 100A, 100B, the down- and up-link optical fibers 20A and 20B, and the N radio access units, operates K-fold as K single-cell communication systems with respect to the corresponding sets of terminals X₁, ..., X_{K} and X'₁, ..., X'_{K}, and the same communication equipment is capable of operating L-fold as L multi-cell communication systems with respect to the sets of terminals Y₁₁, ..., Y_{LN} and Y'₁₁, ..., Y'_{LN}. Hence, the communication equipment of this embodiment achieves very high cost-performance for utilization of the hybrid systems.

### EMBODIMENT 6

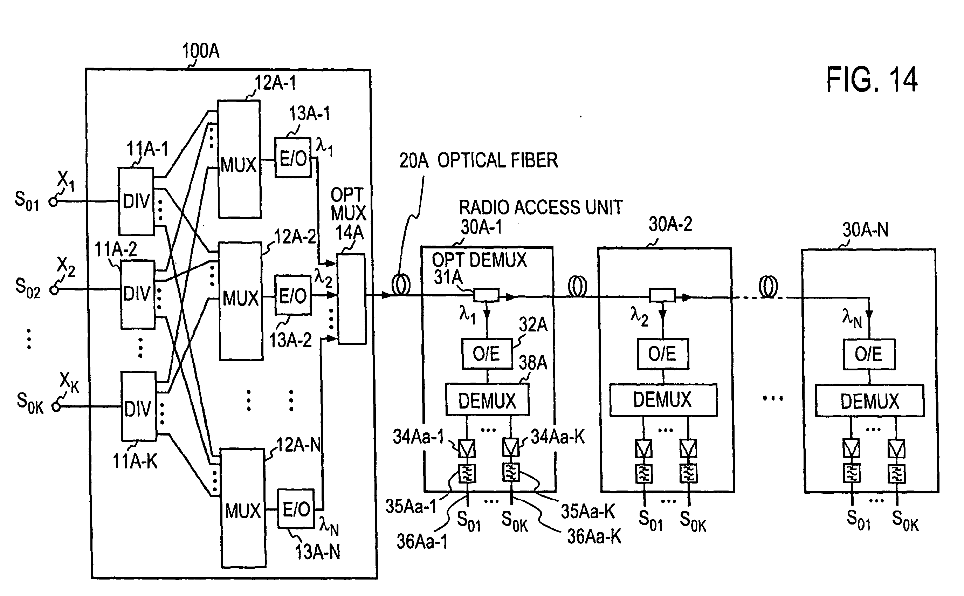

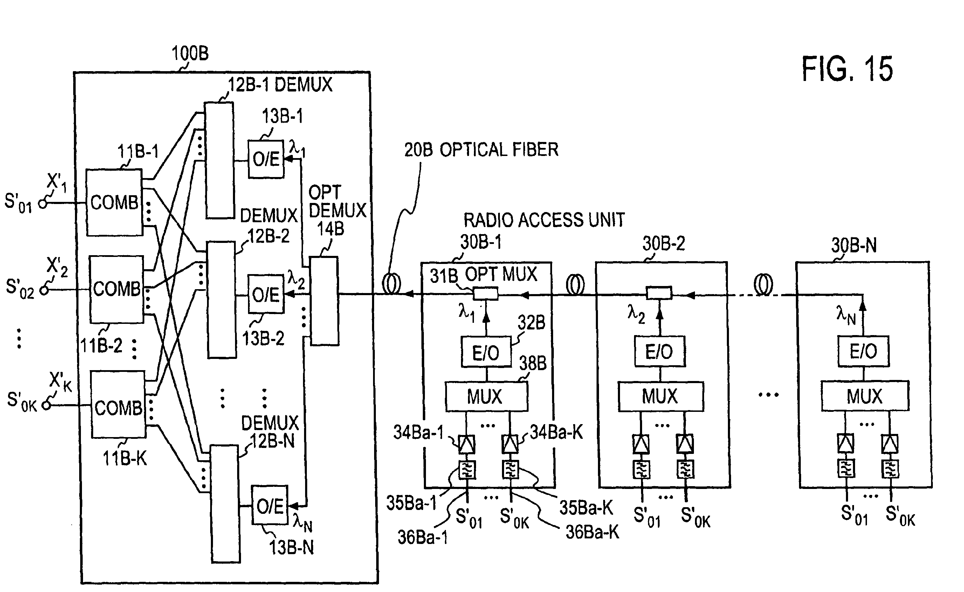

Figures 14 and 15 illustrate a sixth embodiment of the present invention. Figure 14 shows the case where the number L of multi-cell radio systems in Fig. 12 is reduced to zero. In Fig. 14, the process of transmitting down-link RF signals of K (where K is an integer equal to or greater than 1) single-cell radio systems is the same as the process of transmission of the down-link RF signals of the K single-cell radio systems in Fig. 12.

Figure 15 shows the case where the number L of multi-cell radio systems in Fig. 13 is reduced to zero. In Fig. 15, the process of transmitting up-link RF signals of K (where K is an integer equal to or greater than 1) single-cell radio systems is the same as the process of transmission of the up-link RF signals of the K single-cell radio systems in Fig. 13.

In the embodiments of Figs. 14 and 15, the communication equipment, comprised of the divider/comber units 100A, 100B, the down- and up-link optical fibers 20A and 20B and the N radio access units, is capable of operating K-fold as K single-cell communication systems with respect to the corresponding sets of terminals X₁, ..., X_{K} and X₁, ..., X'_{K}. Hence, the communication equipment of this embodiment achieves very high cost-performance for utilization of the hybrid systems.

### EMBODIMENT 7

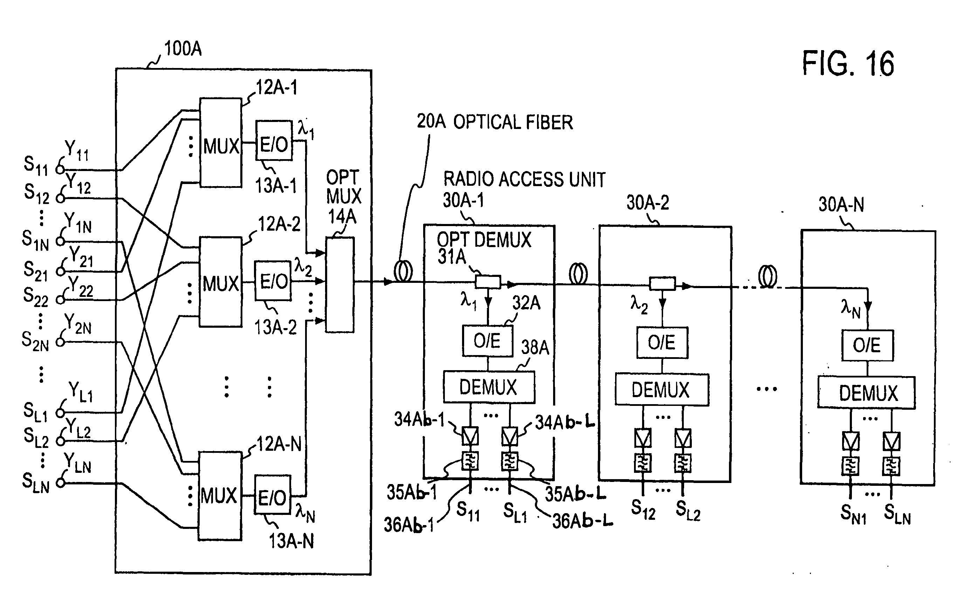

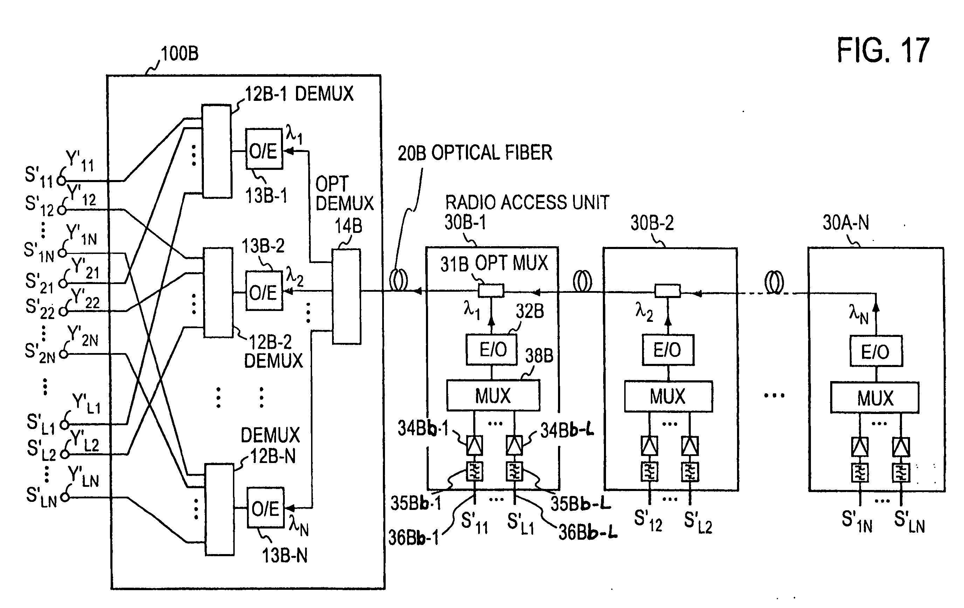

Figures 16 and 17 illustrate a seventh embodiment of the present invention. Figure 16 shows the case where the number K of single-cell radio systems in Fig. 12 is reduced to zero. In Fig. 16, the process of transmitting down-link RF signal sequences of L (where L is an integer equal to or greater than 1) multi-cell radio systems is the same as the process of transmission of the down-link RF signal sequences of the L multi-cell radio systems in Fig. 12.

Figure 17 shows the case where the number K of single-cell radio systems in Fig. 13 is reduced to zero. In Fig. 17, the process of transmitting up-link RF signal sequence of L (where L is an integer equal to or greater than 1) multi-cell radio systems is the same as the process of transmission of the up-link RF signal sequences of the L multi-cell radio systems in Fig. 13.

In the embodiments of Figs. 14 and 15, too, the communication equipment, comprised of the divider/comber units 100A, 100B, the down- and up-link optical fibers 20A and 20B and the N radio access units, is capable of operating L-fold as L multi-cell communication systems with respect to the corresponding sets of terminals Y₁₁, ..., Y_{LN} and Y'₁₁, ..., Y'_{LN}. Hence, the communication equipment of this embodiment achieves very high cost-performance for utilization of the hybrid systems.

### EFFECT OF THE INVENTION

As described above, according to the present invention, the same system, which comprises a divider/combiner unit, down- and up-link optical fibers and N radio access units, can be operated as multiple communication systems corresponding to multiple input/output terminals. The communication equipment utilizes to connect multiple radio systems on the same optical fiber transmitting means. As a result, the system has higher cost-performance than the existing indoor radio communications systems such as a wirelss LAN, and a mobile communication system.

For example, the use of a wireless LAN system and a mobile communication system as the multiple communication systems enables mobile communication terminals and wireless LAN terminals to be used on the same communication equipment.

By setting different optical wavelengths between the divider/combiner unit and each radio access unit, N independent RF signal transmission lines are formed apparently between the divider/combiner unit and each radio access unit. Consequently, RF signals of multi-cell communication systems are transmitted over the respective transmission lines, and the RF signals of the single-cell communication systems are simultaneously transmitted over all of the transmission lines. This enable single-cell radio systems and multi-cell radio systems to be accommodated in one optical fiber transmission system, hence providing increased utilization cost-performance of the transmission system.

Alternatively, plural RF signals are divided/combined corresponding to plural input/output terminals, and they are transmitted as optical signals of different wavelengths between the divider/combiner unit and N radio access units, by which the communication equipment can be used as a single-cell communication system and/or multi-cell communication system; therefore, the utilization cost-performance of the communication equipment can be increased.

## Claims

1. A communication equipment comprising:
down-link and up-link optical fibers (20A-1, 20A-2, 20B-1, 20B-2);
N radio access units (30-11 to 30-1N, 30-21 to 30-2N), wherein N is an integer equal to or greater than 1 and each radio access unit is connected to a down-link optical fiber and an up-link optical fiber, and having:
- antenna means (36);
- first converting means (32A) for receiving a down-link optical signal from said down-link optical fiber, for converting the down-link optical signal to a down-link RF signal and for sending the down-link RF signal by said antenna means (36), and
- second converting means (32B) for receiving an up-link RF signal by said antenna means (36), for converting the up-link RF signal to an up-link optical signal and for sending the up-link optical signal to said up-link optical fiber;
**characterized by**:
a divider/combiner unit (100) having:
- first input terminals (X₁, X₂) for receiving a down-link RF signal for a first communication system and first output terminals (X'₁, X'₂) for outputting an up-link RF signal for the first communication system;
- second input terminals (Y₁, Y₂) for receiving a down-link RF signal for a second communication system and second output terminals (Y_{'1}, Y'₂) for outputting an up-link RF signal for the second communication system;
- third converting means (12A-1, 13A-1, 12A-2, 13A-2) for converting a down-link RF signal applied to a first input terminal for said first communication system and a down-link RF signal applied to a second input terminal for said second communication system into an optical signal, and for sending this optical signal as a down-link optical signal via a down-link optical fiber to said radio access units (30-11 to 30-1N; 30-21 to 30-2N); and
- fourth converting means (12B-1, 13B-1, 12B-2, 13B-2) for converting an up-link optical signal, sent via an up-link optical fiber from a radio access unit, into an up-link RF signal, for distinguishing whether the up-link RF signal relates to said first communication system or to said second communication system, and for providing an up-link RF signal for said first communication system to said first output terminals (X'₁, X'₂) and an up-link RF signal for said second communication system to said second output terminals (Y'₁, Y'₂).

2. The communication equipment of claim 1, wherein said first and second communication systems are a mobile communication system and a wireless LAN communication system of different frequency bands.

3. The communication equipment of claim 1 or 2, wherein said divider/combiner unit (100) comprises:
a multiplexer (12A-1; 12A-2) connected to said first and second input terminals (X₁, Y₁; X₂, Y₂) for multiplexing a mobile communication RF signal and a wireless LAN RF signal of different frequency bands input from said first and second input terminals, respectively;
an electro/optic converter (13A-1; 13A-2) for converting the output from said multiplexer (12A-1; 12A-2) into an optical signal and providing said optical signal to said down-link optical fiber (20A-1; 20A-2);
an opto/electric converter (13B-1; 13B-2) for converting an optical signal, received from said up-link optical fiber (20B-1; 20B-2), into an electric RF signal; and
a demultiplexer (12B-1; 12B-2) for demultiplexing the output from said opto/electric converter into a mobile communication RF signal and a wireless LAN RF signal of different frequency bands and providing said mobile communication RF signal and wireless LAN RF signal to said first and second output terminals (X'₁, Y'₁; X'₂, Y'₂), respectively.

4. The communication equipment of claim 3, further comprising:
a mobile radio modem (17) for demodulating said mobile communication RF signal supplied from said demultiplexer (12B-1; 12B-2) via a first output terminal (X'₁, X'₂) and providing the demodulated mobile communication RF signal as a mobile communication signal to a mobile communication network, and for modulating a mobile communication signal supplied from said mobile communication network into a mobile communication RF signal and providing said mobile communication RF signal to said multiplexer via a first input terminal (X₁, X₂); and
wireless LAN repeater means (15), supplied with said wireless LAN RF signal from said demultiplexer (12B-1; 12B-2) via a second output terminal (Y'₁, Y'₂), for providing said wireless LAN RF signal via a second input terminal (Y₁, Y₂) to said multiplexer corresponding to the destination of said wireless LAN RF signal.

5. The communication equipment of claim 4, wherein said wireless LAN repeater means (15) has means for incorporating an Internet protocol into said wireless LAN RF signal, making it possible to connect said wireless LAN system to an Internet protocol network (80).

6. The communication equipment of claim 4, further comprising:
a protocol converter (101) connected to said wireless LAN repeater means (15), for converting a wireless LAN system protocol to a mobile communication system protocol and vice versa; and
a combiner/separator (102) connected to said protocol converter (101) and said mobile radio modem (17) for combining said mobile communication signal from said mobile radio modem and a protocol-converted wireless LAN signal from said protocol converter, and sending the combined signal to said mobile communication network (70); and for separating a signal from said mobile communication network into a mobile communication signal and a protocol-converted wireless LAN signal, and providing said mobile communication signal and said protocol-converted wireless LAN signal to said mobile radio modem (17) and said protocol converter (101), respectively.

7. The communication equipment of claim 1, wherein said first and second communication systems are: a single-cell communication system for causing said N radio access units to function as a single cell and a multi-cell communication system for causing said N radio access units to function as N multiple cells.

8. The communication equipment of claim 1 or 7, wherein:
said divider/combiner unit (100, 100A) comprises:
- a down-link divider (11A) for dividing a first RF signal of a first down-link frequency band, provided to a first input terminal (X) for said first communication system, into N signals;
- N down-link multiplexers (12A-1 to 12A-N) each for multiplexing a different one of said N signals from said down-link divider with a corresponding one of N second RF signals for said second communication system provided to N second input terminals (Y₁ to Y_{N}), adjacent ones of said N second RF signals having different frequencies in a second down-link frequency band different from said first down-link frequency band;
- N electro/optic converters (13A-1 to 13A-N) for converting the outputs from said N down-link multiplexers into optical signals of different wavelengths; and
- a down-link optical multiplexer (14A) for multiplexing said optical signals from said N down-link electro/optic converters and providing the multiplexed output as said down-link optical signal to said down-link optical fiber (20A);
said N radio access units (30A-1 to 30A-N) each comprising:
- a down-link optical demultiplexer (31A) for extracting a down-link optical signal of one of said different wavelengths from said down-link optical signal on said down-link optical fiber;
- a down-link opto/electric converter (32A) for converting said extracted optical signal into an electric RF signal;
- a first down-link filter (34Aa) for extracting a first down-link RF signal of said first down-link frequency band from said electric RF signal and providing said first down-link RF signal to said antenna means (36Aa); and
- a second down-link filter (34Ab) for extracting a second down-link RF signal in said second down-link frequency band from said electric RF signal and providing said second down-link RF signal to said antenna means (36Ab).

9. The communication equipment of claim 1, 7 or 8, wherein:
said N radio access units (30B-1 to 30B-N) each comprises:
- a first up-link filter (35Ba) for extracting a first up-link RF signal of a first up-link frequency band from a received signal of said antenna means (36Ba);
- a second up-link filter (34Bb) for extracting a second up-link RF signal in a second up-link frequency band different from said first up-link frequency band from said received signal of said antenna means (36Bb);
- an up-link combiner (33B) for combining said first and second up-link RF signals from said first and second up-link filters (34Ba, 34Bb);
- an up-link electro/optic converter (32B) for converting the output from said up-link combiner into an optical signal of a different wavelength; and
- an up-link optical multiplexer (31B) for providing said converted optical signal as said up-link optical signal to said up-link optical fiber (20B); and
said divider/combiner unit (100, 100B) comprises:
- an up-link optical demultiplexer (14B) for demultiplexing said optical signal from said up-link optical fiber (20B) into N optical signals of different wavelengths;
- N up-link opto/electric converters (13B-1 to 13B-N) for converting said N optical signals of different wavelengths into electric RF signals;
- N up-link dividers (12B-1 to 12B-N) each for dividing one of said electric RF signals from said N up-link opto/electric converters into a first RF signal for said first communication system and a second RF signal for said second communication system; and
- a second up-link combiner (11B) for combining the first RF signals from said N up-link dividers and providing said combined first RF signal to a first output terminal (X'), the second RF signals from said N up-link dividers being provided to N second output terminals (Y'₁ to Y'_{N}).

10. The communication equipment of claim 1 or 7, wherein:
said divider/combiner unit (100, 100A) is adapted to receive a first radio RF signal of a first down-link frequency band at a first input terminal for said first communication system and N second radio RF signals in a second down-link frequency band different from said first down-link frequency band at N second input terminals for said second communication system; said divider/combiner unit (100, 100A) comprises:
- N down-link electro/optic converters (13A-1 to 13A-N) for converting said N second radio RF signals in into optical signals of different wavelengths;
- a down-link optical multiplexer (14A) for multiplexing said optical signals from said N down-link electro/optic converters; and
- an external optical modulator (9A) for externally modulating the multiplexed optical signal from said down-link optical multiplexer by said first radio RF signal and providing the modulated output as said down-link optical signal to said down-link optical fiber (20A); and
said N radio access units (30A-1 to 30A-N) each comprises:
- a down-link optical demultiplexer (31A) for extracting a down-link optical signal of one of said different wavelengths from said down-link optical signal on said down-link optical fiber (20A);
- a down-link opto/electric converter (32A) for converting said down-link optical signal, extracted by said down-link optical demultiplexer, into an electric RF signal;
- a first down-link filter (34Aa) for extracting a first down-link RF signal of said first down-link frequency band from said electric RF signal and providing said extracted first down-link RF signal to said antenna means (36Aa); and
- a second down-link filter (34Ab) for extracting a second down-link RF signal in said second down-link frequency band from said electric RF signal and providing said extracted second down-link RF signal to said antenna means (36Ab).

11. The communication equipment of claim 1, 7 or 10, wherein:
said N radio access units (30B-1 to 30B-N) each comprises:
- a first up-link filter (35Ba) for extracting a first up-link RF signal of a first up-link frequency band from a received signal of said antenna means (36Ba);
- a second up-link filter (34Bb) for extracting a second up-link RF signal in a second up-link frequency band different from said first up-link frequency band from said received signal of said antenna means (36Bb);
- an up-link combiner (33B) for combining said first and second up-link RF signals from said first and second up-link filters (34Ba, 34Bb);
- an up-link electro/optic converter (32B) for converting the output from said up-link combiner (33B) into an optical signal of a different wavelength; and
- an up-link optical multiplexer (31B) for providing said converted optical signal as said up-link optical signal to said up-link optical fiber (20B); and
said divider/combiner unit (100, 100B) comprises:
- an up-link optical divider (9B) for dividing said optical signal from said up-link optical fiber (20B) into two optical signals;
- a first up-link opto/electric converter (13B-0) for converting one of said two optical signals from said up-link optical divider (9B) into a first up-link electric signal;
- a third up-link filter (19B-0) for extracting said first up-link RF signal of said first up-link frequency band from said first up-link electric signal and providing said extracted first up-link RF signal to said first output terminal for said first communication system;
- an up-link optical demultiplexer (14B) for demultiplexing the other optical signal divided by said optical divider (9B) into N optical signals of different wavelengths;
- N second up-link opto/electric converters (13B-1 to 13B-N) for converting said N optical signals of different wavelengths into N second up-link electric RF signals; and
- N fourth up-link filters (19B-1 to 19B-N) for extracting N second up-link RF signals of different frequencies in said second up-link frequency band from said second up-link electric signals and providing said N extracted second up-link RF signals to N second output terminals for said second communication system.

12. The communication equipment of claim 9 or 11, wherein:
said antenna means (36a, 36b) of each of said radio access units (30-i) has a first antenna (36a) for transmitting and receiving RF signals of said first up- and down-link frequency bands, and a second antenna (36b) for transmitting and receiving RF signals of said second up- and down-link frequency bands; and
each of said radio access units (30-i) has a first duplexer (37a) for providing said RF signal of said first up-link frequency band received by said first antenna (36a) to said first up-link filter (34Ba) and for providing the output RF signal from said first down-link filter (34Aa) to said first antenna (36a), and a second duplexer (37b) for providing said RF signal in said second up-link frequency band received by said second antenna (36b) to said second up-link filter (34Bb) and for providing the output RF signal from said second down-link filter (35Ab) to said second antenna (36b).

13. The communication equipment of claim 1, wherein: said first communication system is a system in which a single-cell formed by said N radio access units (30A-1 to 30A-N) operates K-fold in correspondence to K first input terminals (X₁ to X_{K}) and K first output terminals (X'₁ to X'_{K}); and said second communication system is a system on which multiple cells formed by said N radio access units operate L-fold in correspondence to L sets of second input terminals (Y₁₁ to Y_{LN}), each of said L sets being composed of N second input terminals.

14. The communication equipment of claim 13, wherein: first down-link RF signals of K different frequency bands F_{A-1}, ..., F_{A-K} are input to said K first input terminals (X₁ to X_{K}), and second down-link RF signals of different frequency bands F_{B-1}, ..., F_{B-L} are input to said L sets of second input terminals (Y₁₁ to Y_{LN});
said divider/combiner unit (100, 100A) comprises:
- K down-link dividers (11A-1 to 11A-K) each for dividing a corresponding one of said K first down-link RF frequency signals of said K down-link frequency bands F_{A-1}, ..., F_{A-K} input to said K first input terminals into N down-link RF signals;
- N down-link multiplexers (12A-1 to 12A-N), an i-th one of which, letting i=1,...,N, is adapted to multiplex the i-th outputs from said K down-link dividers and said second down-link RF signals from an i-th one of the second input terminals of each of said L sets;
- N down-link electro/optic converters (13A-1 to 13A-N) each for converting the multiplexed output from one of said N down-link multiplexers into down-link optical signals of N different wavelengths λ₁, ..., λ_{N}; and
- a down-link optical multiplexer (14A) for multiplexing the output optical signals from said N down-link electro/optic converters and providing the multiplexed optical signal as a down-link optical signal to said down-link optical fiber (20A); and
an i-th one of said N radio access units (30A-1 to 30A-N) comprises:
- a down-link optical demultiplexer (31A) for extracting the down-link optical signal of the wavelength λᵢ from said down-link optical signal on said down-link optical fiber;
- a down-link opto/electric converter (32A) for converting the extracted down-link optical signal into an electric signal; and
- a down-link demultiplexer (38A) for extracting K first RF signals of said frequency bands F_{A-1}, ..., F_{A-K} for said first communication system and L second RF signals of said frequency bands F_{B-1}, ..., F_{B-L} for said second communication system from the electric signal converted by said down-link opto/electro converter.

15. The communication equipment of claim 14, wherein said i-th radio access unit further comprises:
- K+L up-link filters (35Ba-1 to 35Ba-K; 35Bb-1 to 35Bb-L) for extracting K first up-link RF signals of frequency bands F'_{A-1}, ..., F'_{A-K} and L second up-link RF signals of frequency bands F'_{B-1}, ..., F'_{B-L} from a received signal of said antenna means (36Ba-1 to 36Ba-K; 36Bb-1 to 36Bb-L);
- an up-link multiplexer (38B) for multiplexing said RF signals extracted by said K+L up-link filters;
- an up-link electro/optic converter (32B) for converting the multiplexed output from said up-link multiplexer into an optical signal of a wavelength λᵢ; and
- an up-link optical multiplexer (31B) for providing the converted optical signal from said up-link electro/optic converter as an up-link optical signal to said up-link optical fiber (20B); and
said divider/combiner unit (100B) comprises:
- an optical demultiplexer (14B) for demultiplexing said up-link optical signal from said up-link optical fiber into optical signals of said N wavelengths;
- N up-link opto/electric converters (13B-1 to 13B-N) each for converting said up-link optical signals of N wavelengths into electric signals;
- N up-link demultiplexers (12B-1 to 12B-N) each supplied with the output electric signal from one of said N up-link opto/electric converters, an i-th one of said N up-link demultiplexers separating the electric signal applied thereto into K first up-link RF signals of said frequency bands F'_{A-1}, ..., F'_{A-K} and L second up-link RF signals of said frequency bands F'_{B-1}, ..., F'_{B-L}; and
- K up-link combiners (11B-1 to 11B-K), a j-th one of which being adapted to receive from said N up-link demultiplexers the first up-link RF signals of the frequency band F'_{A-j,} where j=1,...,K, to combine said first up-link RF signals and to output the combined output to a j-th one of K first output terminals (X'₁ to X'_{K});
wherein the L second up-link RF signals of said frequency bands F'_{B-1}, ..., F'_{B-L} from said i-th up-link demultiplexer are output to an i-th one of the output terminals of each of said L sets of N second output terminals (Y'₁₁ to Y'_{LN}).

16. The communication equipment of claim 1, wherein said first and second communication systems are two K communication systems that are implemented by causing a single cell formed by said N radio access units (30-1 to 30-N), to operate K-fold, where K is an integer equal to or greater than 2;
said divider/combiner unit (100) comprises:
- K down-link dividers (11A-1 to 11A-K) each for dividing one of K down-link RF signals of frequency bands F_{A-1}, ..., F_{A-K}, provided to K of said first input terminals, into N down-link RF signals;
- N down-link multiplexers (12A-1 to 12A-N) each for multiplexing K down-link RF signals, one from each of said K down-link dividers;
- N down-link electro/optic converters (13A-1 to 13A-N) for converting the outputs from said N down-link multiplexers into optical signals of different wavelengths λ₁, ..., λ_{N}, respectively; and
- a down-link optical multiplexer (14A) for multiplexing said optical signals from said N down-link electro/optic converters and providing the multiplexed optical signal as a down-link optical signal to said down-link optical fiber (20A); and
wherein, letting i=1,...,N, an i-th one of said N radio access units (30A-1 to 30A-N) comprises:
- a down-link optical demultiplexer (31A) for extracting the down-link optical signal of the wavelength λᵢ from said down-link optical signal on said down-link optical fiber;
- a down-link opto/electric converter (32A) for converting said down-link optical signal extracted by said down-link optical demultiplexer into an electric signal; and
- a down-link demultiplexer (38A) for extracting said K down-link RF signals of said frequency bands F_{A-1}, ..., F_{A-K} from said electric signal from said down-link opto/electric converter and providing said K down-link RF signals to said antenna means (36Aa-1 to 36Aa-K).

17. The communication equipment of claim 16, wherein said i-th radio access unit (30B-i) further comprises:
- K up-link filters (35Ba-1 to 35Ba-K) for extracting up-link RF signals of frequency bands F'_{A-1}, ..., F'_{A-K} from a received signal of said antenna means (36Ba-1 to 36Ba-K);
- an up-link multiplexer (38B) for multiplexing said up-link RF signals from said K up-link filters;
- an up-link electro/optic converter (32B) for converting the output from said up-link multiplexer into an optical signal of the wavelength λᵢ; and
- an up-link optical multiplexer (31B) for providing said optical signal from said up-link electro/optic converter as an up-link optical signal to said up-link optical fiber (20B); and
said divider/combiner unit (100B) comprises:
- an up-link optical demultiplexer (14B) for demultiplexing said up-link optical signal from said up-link optical fiber into N up-link electric signals of said wavelengths λ₁, ..., λ_{N}
- N up-link opto/electric converters (13B-1 to 13B-N) for converting said N up-link optical signals from said up-link optical demultiplexer into electric signals;
- N up-link demultiplexers (12B-1 to 12B-N) each for demultiplexing the electric signal from a corresponding one of said N up-link opto/electric converters into K RF signals of said frequency bands F'_{A-1}, ..., F'_{A-K}; and
- K combiners (11B-1 to 11B-K), a j-th one of which being adapted to combine the RF signals of the frequency band F'_{A-j}, one from each of said N up-link combiners, into a respective up-link RF signals of said frequency bands F'_{A-j} and providing said combined RF signals to a j-th one of K output terminals of said first output terminals, j=1,...,K.

18. The communication equipment of claim 1, wherein said first and second communication systems are two L communication systems that are implemented by causing a single cell, formed by said N radio access units, to operate L-fold, where L is an integer equal to or greater than 2, and down-link RF signals of frequency bands F_{B-1}, ..., F_{B-L} are provided to L sets of N second input terminals; and
wherein, letting i=1, ..., N, said divider/combiner unit (100A) comprises:
- N down-link multiplexers (12A-1 to 12A-N), an i-th one of which being adapted to combine said down-link RF signals from an i-th one of the input terminals of each of said L sets of input terminals;
- N down-link electro/optic converters (13A-1 to 13A-N) for converting the outputs from said N down-link multiplexers into optical signals of different wavelengths λ₁, ..., λ_{N}; and
- a down-link optical multiplexer (14A) for multiplexing said optical signals from said N down-link electro/optic converters and providing the multiplexed output as a down-link optical signal to said down-link optical fiber (20A); and
an i-th one of said N radio access units (30A-1 to 30A-N) comprises:
- a down-link optical demultiplexer (31A) for extracting the optical signal of the wavelength λᵢ from said down-link optical signal on said down-link optical fiber;
- an opto/electric converter (32A) for converting said down-link optical signal from said down-link optical demultiplexer into an electric signal; and
- a down-link demultiplexer (38A) for extracting said down-link RF signals of said frequency bands F_{B-1}, ..., F_{B-L} from said electric signal converted by said down-link opto/electric converter and providing said extracted down-link RF signals to said antenna means (36Ab-1 to 36Ab-L).

19. The communication equipment of claim 18, wherein: said i-th radio access unit comprises:
- L up-link filters (35Bb-1 to 35Bb-L) for extracting up-link RF signals of frequency bands F'_{B-1}, ..., F'_{B-L} from a signal received by said antenna means;
- an up-link multiplexer (38B) for multiplexing the outputs from said L up-link filters;
- an up-link electro/optic converter (32B) for converting the output from said up-link multiplexer into an optical signal of said wavelength λᵢ; and
- an up-link optical multiplexer (31B) for providing said optical signal from said up-link electro/optic converter as an up-link optical signal to said up-link optical fiber (20B); and
said divider/combiner unit (100) comprises:
- an up-link optical demultiplexer (14B) for demultiplexing said up-link optical signal from said up-link optical fiber into N up-link optical signals of said wavelengths λ₁, ..., λ_{N};
- N opto/electric converters (13B-1 to 13B-N) for converting said N up-link optical signals from said up-link optical demultiplexer into N electric signals; and
- N up-link demultiplexers (12B-1 to 12B-N) each for demultiplexing the electric signal from one of said N up-link opto/electric converters into up-link RF signals of different frequencies; and
wherein an i-th one of said N up-link demultiplexers (12B-1 to 12B-N) is adapted to demultiplex said electric signal into up-link RF signals of said frequency bands F'_{B-1}, ..., F'_{B-L} and to output said up-link RF signals to an i-th one of the output terminals of each of L sets of N second output terminals.

## Patentansprüche

1. Kommunikationsgerät mit:
optischen Downlink und Uplink-Fasern (20A-1, 20A-2, 20B-1, 20B-2);
N Funkzugangseinheiten (30-11 bis 30-1N, 30-21 bis 30-N2), wobei N eine ganze Zahl größer oder gleich 1 ist und jede Funkzugangseinheit mit einer optischen Downlinkfaser und einer optischen Uplinkfaser verbunden ist und aufweist:
- Antennenmittel (36);
- ersten Wandlermitteln (32A) zum Empfangen eines optischen Downlinksignals von der optischen Downlinkfaser, zum Wandeln des optischen Downlinksignals in ein Downlink-Hochfrequenzsignal und zum Senden des Downlink-Hochfrequenzsignals über die Antennenmittel (36) und
- zweiten Wandlermitteln (32B) zum Empfangen eines Uplink-Hochfrequenzsignals über die Antennenmittel (36), zum Wandeln des Uplink-Hochfrequenzsignals in ein optisches Uplinksignal und zum Senden des optischen Uplinksignals an die optische Uplinkfaser;
**gekennzeichnet durch**:
eine Teiler/Kombinierer-Einheit (100) mit :
- ersten Eingangsanschlüssen (X₁, X₂) zum Empfangen eines Downlink-Hochfrequenzsignals für ein erstes Kommunikationssystem und ersten Ausgangsanschlüssen (X'₁, X'₂) zum Ausgeben eines Uplink-Hochfrequenzsignals für das erste Kommunikationssystem;
- zweiten Eingangsanschlüssen (Y₁, Y₂) zum Empfangen eines Downlink-Hochfrequenzsignals für ein zweites Kommunikationssystem und zweiten Ausgangsanschlüssen (Y'₁, Y'₂) zum Ausgeben eines Uplink-Hochfrequenzsignals für das zweite Kommunikationssystem;
- dritten Wandlermitteln (12A-1, 13A-1, 12A-2, 13A-2) zum Wandeln eines Downlink-Hochfrequenzsignals, das an einen ersten Eingangsanschluss für das erste Kommunikationssystem angelegt ist, und eines Downlink-Hochfrequenzsignals, das an einen zweiten Eingangsanschluss für das zweite Kommunikationssystem angelegt ist, in ein optisches Signal und zum Senden dieses optischen Signals als ein optisches Downlinksignal über eine optische Downlinkfaser an die Funkzugangseinheiten (30-11 bis 30-1N, 30-21 bis 30-2N); und
- vierten Wandlermitteln (12B-1, 13B-1, 12B-2, 13B-2) zum Wandeln eines optischen Uplinksignals, gesendet über eine optische Uplinkfaser von einer Funkzugangseinheit, in ein Uplink-Hochfrequenzsignal, zum Unterscheiden, ob das Uplink-Hochfrequenzsignal das erste Kommunikationssystem oder das zweite Kommunikationssystem betrifft, und zum Liefern eines Uplink-Hochfrequenzsignals für das erste Kommunikationssystem an die ersten Ausgangsanschlüsse (X'₁, X'₂) und eines Uplink-Hochfrequenzsignals für das zweite Kommunikationssystem an die zweiten Ausgangsanschlüsse (Y'₁, Y'₂).

2. Kommunikationsgerät nach Anspruch 1, bei dem das erste und das zweite Kommunikationssystem ein Mobilkommunikationssystem und ein Schnurlos-LAN-Kommunikationssystem mit unterschiedlichen Frequenzbändern sind.

3. Kommunikationsgerät nach Anspruch 1 oder 2, bei dem die Teiler/Kombinierereinheit (100) umfasst:
- einen mit den ersten und zweiten Eingangsanschlüssen (X₁, Y₁; (X₂, Y₂) verbundenen Multiplexer (12A-1, 12A-2) zum Multiplexen eines Mobilkommunikations-Hochfrequenzsignals und eines Schnurlos-LAN-Hochfrequenzsignals unterschiedlicher Frequenzbänder, die über den ersten beziehungsweise den zweiten Eingangsanschluss eingegeben sind;
- einen elektrisch-optischen Wandler (13A-1; 13A-2) zum Wandeln der Ausgabe aus dem Multiplexer (12A-1; 12A-2) in ein optisches Signal und Liefern des optischen Signals an die optische Downlinkfaser (20A-1; 20A-2);
- einen optisch-elektrischen Wandler (13B-1; 13B-2) zum Wandeln eines von der optischen Uplinkfaser (20B-1; 20B-2) empfangenen optischen Signals in ein elektrisches Hochfrequenzsignal; und
- einen Demultiplexer (12B-1; 12B-2) zum Demultiplexen der Ausgabe aus dem optisch-elektrischen Wandler in ein Mobilkommunikations-Hochfrequenzsignal und ein Schnurlos-LAN-Hochfrequenzsignal unterschiedlicher Frequenzbänder und zum Liefern des Mobilkommunikations-Hochfrequenzsignals und des Schnurlos-LAN-Hochfrequenzsignals an den ersten beziehungsweise den zweiten Ausgangsanschluss (X'₁, Y'_{2;} X'₂, Y'₂).

4. Kommunikationsgerät nach Anspruch 3, ferner mit:
- einem Mobilfunkmodem (17) zum Demodulieren des von dem Demultiplexer (12B-1; 12B-2) über einen ersten Ausgangsanschluss (X'₁, X'₂) zugeführten Mobilkommunikations-Hochfrequenzsignals und Liefern des demodulierten Mobilkommunikations-Hochfrequenzsignals als ein Mobilkommunikationssignal an ein Mobilkommunikations-Netzwerk und zum Modulieren eines von dem Mobilkommunikations-Netzwerk gelieferten Mobilkommunikationssignals in ein Mobilkommunikations-Hochfrequenzsignal und Liefern des Mobilkommunikations-Hochfrequenzsignals an den Multiplexer über einen ersten Eingangsanschluss (X₁, X₂); und
- Schnurlos-LAN-Repeatermitteln (15), die mit dem Schnurlos-LAN-Hochfrequenzsignal von dem Demultiplexer (12B-1; 12B-2) über einen zweiten Ausgangsanschluss (Y'₁, Y'₂) versorgt werden, um das Schnurlos-LAN-Hochfrequenzsignal über einen zweiten Eingangsanschluss (Y₁, Y₂) an den Multiplexer entsprechend dem Ziel des Schnurlos-LAN-Hochfrequenzsignals zu liefern.

5. Kommunikationsgerät nach Anspruch 4, bei dem die Schnurlos-LAN-Repeatermittel (15) Mittel zum Einbeziehen eines Internetprotokolls in das Schnurlos-LAN-Hochfrequenzsignal hat, wodurch es möglich ist, das Schnurlos-LAN-System an ein Internetprotokoll-Netzwerk (80) anzuschließen.

6. Kommunikationsgerät nach Anspruch 4, ferner mit:
- einem Protokollwandler (101), der an die Schnurlos-LAN-Repeatermittel (15) angeschlossen ist, um ein Schnurlos-LAN-Systemprotokoll in ein Mobilkommunikationssystem-Protokoll und umgekehrt zu wandeln; und
- einen mit dem Protokollwandler (101) und dem Mobilfunkmodem (17) verbundenen Kombinierer/Separator (102) zum Kombinieren des Mobilkommunikationssignals von dem Mobilfunkmodem und eines protokollgewandelten Schnurlos-LAN-Signals von dem Protokollwandler und Senden des kombinierten Signals an das Mobilkommunikationsnetzwerk (70); und zum Separieren eines Signals von dem Mobilkommunikationsnetzwerk in ein Mobilkommunikationssignal und ein protokollgewandeltes Schnurlos-LAN-Signal und Liefern des Mobilkommunikationssignals und des protokollgewandelten Schnurlos-LAN-Signals an das Mobilfunkmodem (17) beziehungsweise den Protokollwandler (101).

7. Kommunikationsgerät nach Anspruch 1, bei dem das erste und das zweite Kommunikationssystem sind:
- ein Einzelzellen-Kommunikationssystem zum Veranlassen der N Funkzugangseinheiten, als eine einzige Zelle zu arbeiten, und ein Multizellen-Kommunikationssystem zum Veranlassen der N Funkzugangseinheiten, als N Vielfachzellen zu arbeiten.

8. Kommunikationsgerät nach Anspruch 1 oder 7, bei dem:
die Teiler/Kombinierereinheit (100, 100A) umfasst:
- einen Downlinkteiler (11A) zum Teilen eines an einen ersten Eingangsanschluss (X) des ersten Kommunikationssystems angelegten ersten Hochfrequenzsignals eines ersten Downlinkfrequenzbandes in N Signale;
- N Downlink-Multiplexer (12A-1 bis 12A-N), von denen jeder ein anderes der N Signale von dem Downlinkteiler mit einem entsprechenden von N zweiten Hochfrequenzsignalen für das zweite Kommunikationssystem, die N zweiten Eingangsanschlüssen (Y₁ bis X_{N}) zugeführt sind, multiplext, wobei benachbarte der N zweiten Hochfrequenzsignale unterschiedliche Frequenzen in einem zweiten Downlinkfrequenzband haben, das von dem ersten Downlinkfrequenzband verschieden ist;
- N elektrisch-optische Wandler (13A-1 bis 13A-N) zum Wandeln der Ausgaben aus den N Downlink-Multiptexern in optische Signale von unterschiedlichen Wellenlängen; und
- einen optischen Downlink-Multiplexer (14A) zum Multiplexen der optischen Signale von den N elektrisch-optischen Downlinkwandlern und Liefern der gemultiplexten Ausgabe als das optische Downlinksignal an die optische Downlinkfaser (20A);
wobei die N Funkzugangseinheiten (30A-1 bis 30A-N) jeweils umfassen:
- einen optischen Downlink-Demultiplexer (31A) zum Extrahieren eines optischen Downlinksignals einer der unterschiedlichen Wellenlängen aus dem optischen Downlinksignal auf der optischen Downlinkfaser;
- einen optisch-elektrischen Downlinkwandler (32A) zum Wandeln des extrahierten optischen Signals in ein elektrisches Hochfrequenzsignal;
- ein erstes Downlinkfilter (34Aa) zum Extrahieren eines ersten Downlink-Hochfrequenzsignals des ersten Downlink-Frequenzbandes aus dem elektrischen Hochfrequenzsignal und Liefern des ersten Downlink-Hochfrequenzsignals an die Antennenmittel (36Aa);
- einen zweiten Downlinkfilter (34Ab) zum Extrahieren eines zweiten Downlink-Hochfrequenzsignals in dem zweiten Downlink-Frequenzband aus dem elektrischen Hochfrequenzsignal und Liefern des zweiten Downlink-Hochfrequenzsignals an die Antennenmittel (36Ab).

9. Kommunikationsgerät nach Anspruch 1, 7 oder 8, bei dem:
die N Funkzugangseinheiten (30B-1 bis 30B-N) jeweils umfassen:
- ein erstes Uplinkfilter (35Ba) zum Extrahieren eines ersten Uplink-Hochfrequenzsignals in einem ersten Uplink-Frequenzband aus einem Empfangssignal der Antennenmittel (36Ba);
- einen zweiten Uplinkfilter (34Bb) zum Extrahieren eines zweiten Uplink-Hochfrequenzsignals in einem von dem ersten Uplink-Frequenzband verschiedenen zweiten Uplink-Frequenzband aus dem Empfangssignal der Antennenmittel (36Bb);
- einen Uplinkkombinierer (33B) zum Kombinieren des ersten und des zweiten Uplink-Hochfrequenzsignals aus dem ersten und dem zweiten Uplinkfilter (34Ba, 34Bb);
- einen elektrisch-optischen Uplinkwandler (32B) zum Wandeln der Ausgabe aus dem Uplink-Kombinierer in ein optisches Signal einer anderen Wellenlänge; und
- einen optischen Uplink-Multiplexer (31B) zum Liefern des gewandelten optischen Signals als das optische Uplinksignal an die optische Uplinkfaser (20B); und
die Teiler/Kombinierer-Einheit (100, 100B) umfasst:
- einen optischen Uplink-Demultiplexer (14B) zum Demultiplexen des optischen Signals von der optischen Uplinkfaser (20B) in N optische Signale mit unterschiedlichen Wellenlängen;
- N optisch-elektrische Uplinkwandler (13B-1 bis 13B-N) zum Wandeln der N optischen Signale unterschiedlicher Wellenlängen in elektrische Hochfrequenzsignale;
- N Uplink-Teiler (12B-1 bis 12B-N) zum Teilen jeweils eines der elektrischen Hochfrequenzsignale von den N optisch-elektrischen Uplinkwandlern in ein erstes Hochfrequenzsignal für das erste Kommunikationssystem und ein zweites Hochfrequenzsignal für das zweite Kommunikationssystem; und
- einen zweiten Uplink-Kombinierer (11B) zum Kombinieren der ersten Hochfrequenzsignale von den N Uplink-Teilern und Liefern des kombinierten ersten Hochfrequenzsignals an einen ersten Ausgangsanschluss (X'), wobei die zweiten Hochfrequenzsignale von den N Uplink-Teilern an N zweite Ausgangsanschlüsse (Y'₁, bis Y'_{N}) geliefert werden.

10. Kommunikationsgerät nach Anspruch 1 oder 7, bei dem:
die Teiler/Kombinierereinheit (100, 100A) eingerichtet ist, ein erstes Funk-Hochfrequenzsignal eines ersten Downlink-Frequenzbandes an einem ersten Eingangsanschluss für das erste Kommunikationssystem und N zweite Funk-Hochfrequenzsignale in einem zweiten, von dem ersten Downlink-Frequenzband verschiedenen Frequenzband an N zweiten Eingangsanschlüssen für das zweite Kommunikationssystem zu empfangen, wobei die Teiler-/Kombinierer-Einheit (100, 100A) umfasst:
- N elektrisch-optische Downlinkwandler (13A-1 bis 13A-N) zum Wandeln der N zweiten Funk-Hochfrequenzsignale in optische Signale von unterschiedlichen Wellenlängen;
- einen optischen Downlink-Multiplexer (14A) zum Multiplexen der optischen Signale von den N elektrisch-optischen Downlinkwandlern;
- einen externen optischen Modulator (9A) zum externen Modulieren des gemultiplexten optischen Signals aus dem optischen Downlink-Multiplexer mit dem ersten Funk-Hochfrequenzsignal und Liefern der modulierten Ausgabe als das optische Downlinksignal an die optische Downlinkfaser (20A); und
- wobei die N Funkzugangseinheiten (30A-1 bis 30A-N) jeweils umfassen:
- einen optischen Downlink-Demultiplexer (31A) zum Extrahieren eines optischen Downlinksignals mit einer der unterschiedlichen Wellenlängen aus dem optischen Downlinksignal auf der optischen Downlinkfaser (20A);
- einen optisch-elektrischen Downlinkwandler (32A) zum Wandeln des von dem optischen Downlink-Multiplexer extrahierten optischen Downlinksignals in ein elektrisches Hochfrequenzsignal;
- ein erstes Downlinkfilter (34Aa) zum Extrahieren eines ersten Downlink-Hochfrequenzsignals des ersten Downlink-Frequenzbandes aus dem elektrischen Hochfrequenzsignal und Liefern des extrahierten ersten Downlink-Hochfrequenzsignals an die Antennenmittel (36Aa); und
- ein zweites Downlinkfilter (34Ab) zum Extrahieren eines zweiten Downlink-Hochfrequenzsignals in dem zweiten Downlink-Frequenzband aus dem elektrischen Hochfrequenzsignal und Liefern des extrahierten zweiten Downlink-Hochfrequenzsignals an die Antennenmittel (36Ab).

11. Kommunikationsgerät nach Anspruch 1, 7 oder 10, bei dem:
die N Funkzugangseinheiten (30B-1 bis 30B-N) jeweils umfassen:
- ein erstes Uplinkfilter (35Ba) zum Extrahieren eines ersten Uplink-Hochfrequenzsignals eines ersten Uplink-Frequenzbands aus einem Empfangssignal der Antennenmittel (36Ba);
- ein zweites Uplinkfilter (34Bb) zum Extrahieren eines zweiten Uplink-Hochfrequenzsignals in einem von dem ersten Uplink-Frequenzband verschiedenen zweiten Uplink-Frequenzband aus dem Empfangssignal des Antennenmittels (36Bb);
- einen Uplink-Kombinierer (33B) zum Kombinieren des ersten und des zweiten Uplink-Hochfrequenzsignals aus dem ersten und dem zweiten Uplinkfilter (34Ba, 34Bb);
- einen elektrisch-optischen Uplinkwandler (32B) zum Wandeln der Ausgabe aus dem Uplink-Kombinierer (33B) in ein optisches Signal einer anderen Wellenlänge; und
- einen optischen Uplink-Multiplexer (31B) zum Liefern des gewandelten optischen Signals als das optische Uplinksignal an die optische Uplinkfaser (20B); und
die Teiler/Kombinierer-Einheit (100, 100B) umfasst:
- einen optischen Uplinkteiler (9B) zum Teilen des optischen Signals aus der optischen Uplinkfaser (20B) in zwei optische Signale;
- einen ersten optisch-elektrischen Uplinkwandler (13B-0) zum Wandeln eines der zwei optischen Signale aus dem optischen Uplinkteiler (9B) in ein erstes elektrisches Uplinksignal;
- ein drittes Uplinkfilter (19B-0) zum Extrahieren des ersten Uplink-Hochfrequenzsignals des ersten Uplink-Frequenzbands aus dem ersten elektrischen Uplinksignal und Liefern des extrahierten ersten Uplink-Hochfrequenzsignals an den ersten Ausgangsanschluss für das erste Kommunikationssystem;
- einen optischen Uplink-Demultiplexer (14B) zum Demultiplexen des anderen von dem optischen Teiler (9B) geteilten optischen Signals in N optische Signale unterschiedlicher Wellenlängen;
- N zweite optisch-elektrische Uplinkwandler (13B-1 bis 13B-N) zum Wandeln der N optischen Signale unterschiedlicher Wellenlängen in N zweite elektrische Uplink-Hochfrequenzsignale; und
- N vierte Uplinkfilter (19B-1 bis 19B-N) zum Extrahieren von N zweiten Uplink-Hochfrequenzsignalen unterschiedlicher Frequenzen in dem zweiten Uplink-Frequenzband aus den zweiten elektrischen Uplinksignalen und Liefern der N extrahierten zweiten Uplink-Hochfrequenzsignale an N zweite Ausgangsanschlüsse für das zweite Kommunikationssystem.

12. Kommunikationsgerät nach Anspruch 9 oder 11, bei dem:
die Antennenmittel (36a, 36b) einer jeden der Funkzugangseinheiten (30-i) eine erste Antenne (36a) zum Senden und Empfangen von Hochfrequenzsignalen des ersten Uplink- und Downlink-Frequenzbandes und eine zweite Antenne (36b) zum Senden und Empfangen von Hochfrequenzsignalen des zweiten Uplink- und Downlink-Frequenzbandes aufweisen; und
jede der Funkzugangseinheiten (30-i) einen ersten Duplexer (37a) zum Liefern des von der ersten Antenne (36a) empfangenen Hochfrequenzsignals des ersten Uplink-Frequenzbandes an das erste Uplinkfilter (34Ba) und zum Liefern des Ausgangs-Hochfrequenzsignals aus dem ersten Downlinkfilter (34Aa) an die erste Antenne (36a) und einen zweiten Duplexer (37b) zum Liefern des von der zweiten Antenne (36b) empfangenen Hochfrequenzsignals in dem zweiten Uplink-Frequenzband an das zweite Uplinkfilter (34Bb) und zum Liefern des Ausgangs-Hochfrequenzsignals von dem zweiten Downlinkfilter (35Ab) an die zweite Antenne (36b) umfasst.

13. Kommunikationsgerät nach Anspruch 1, bei dem:
das erste Kommunikationssystem ein System ist, in dem eine von den N Funkzugangseinheiten (30A-1 bis 30A-N) gebildete Einzelzelle K-fach in Bezug auf K erste Eingangsanschlüsse (X₁ bis X_{K}) und K erste Ausgangsanschlüsse (X' bis X'_{K}) wirkt und das zweite Kommunikationssystem ein System ist, bei dem durch die N Funkzugangseinheiten gebildete Vielfachzellen L-fach in Bezug auf L Sätze von zweiten Eingangsanschlüssen (Y₁₁ bis Y_{LN}) wirken, wobei jeder der L Sätze aus N zweiten Eingangsanschlüssen besteht.

14. Kommunikationsgerät nach Anspruch 13, bei dem:
erste Downlink-Hochfrequenzsignale K unterschiedlicher Frequenzbänder F_{A-1}, ..., F_{A-K} den K ersten Eingangsanschlüssen (X₁ bis X_{K}) eingegeben werden und zweite Downlink-Hochfrequenzsignale unterschiedlicher Frequenzbänder F_{B-1}, ..., F_{B-L} den L Sätze von zweiten Eingangsanschlüssen (Y₁₁ bis Y_{LN}) eingegeben werden;
die Teiler/Kombinierer-Einheit (100, 100A) umfasst:
- K Downlink-Teiler (11A-1 bis 11A-K), die jeweils ein entsprechendes der K ersten Downlink-Hochfrequenzsignale der K Downlink-Frequenzbänder F_{A-1}, ..., F_{A-K}, die den K ersten Eingangsanschlüssen eingegeben werden, in N Downlink-Hochfrequenzsignale teilen;
- N Downlink-Multiplexer (12A-1 bis 12A-N), von denen ein i-ter, mit i = 1, ..., N, eingerichtet ist, die i-ten Ausgaben aus den K Downlink-Teilern und die zweiten Downlink-Hochfrequenzsignale aus einem i-ten der zweiten Eingangsanschlüsse jedes der L Sätze zu multiplexen;
- N elektrisch-optische Downlink-Wandler (13A-1 bis 13A-N) jeweils zum Wandeln der gemultiplexten Ausgabe eines der N Downlink-Multiplexer in optische Downlinksignale mit N unterschiedlichen Wellenlängen λ₁, ..., λ_{N}; und
- einen optischen Downlink-Multiplexer (14A) zum Multiplexen der ausgegebenen optischen Signale aus den N elektrisch-optischen Downlinkwandlern und Liefern des gemultiplexten optischen Signals als ein optisches Downlinksignal an die optische Downlinkfaser (20A); und
eine i-te der N Funkzugangseinheiten (30A-1 bis 30A-N) umfasst:
- einen optischen Downlink-Multiplexer (31A) zum Extrahieren des optischen Downlinksignals der Wellenlänge λᵢ aus dem optischen Downlinksignal auf der optischen Downlinkfaser;
- einen optisch-elektrischen Downlinkwandler (32A) zum Wandeln des extrahierten optischen Downlinksignals in ein elektrisches Signal; und
- einen Downlink-Demultiplexer (38A) zum Extrahieren von K ersten Hochfrequenzsignalen der Frequenzbänder F_{A-1}, ..., F_{A-K} für das erste Kommunikationssystem und von L zweiten Hochfrequenzsignalen der Frequenzbänder F_{B-1}, ..., F_{B-L} für das zweite Kommunikationssystem aus dem von dem optisch-elektrischen Downlinkwandler gewandelten elektrischen Signal.

15. Kommunikationsgerät nach Anspruch 14, bei dem die i-te Funkzugangseinheit ferner umfasst:
- K + L Uplinkfilter (35Ba-1 bis 35Ba-K; 35Bb-1 bis 35Bb-L) zum Extrahieren von K ersten Uplink-Hochfrequenzsignalen von Frequenzbändern F'_{A-1}, ..., F'_{A-K} und L zweiten Uplink-Hochfrequenzsignalen von Frequenzbändern F'_{B-1}, ..., F_{B-L} aus einem Empfangssignal der Antennenmittel (36Ba-1 bis 36Ba-K; 36Bb-1 bis 36Bb-L);
- einen Uplinkmultiplexer (38B) zum Multiplexen der von den K + L Uplinkfiltern extrahierten Hochfrequenzsignale;
- einen elektrisch-optischen Uplinkwandler (32B) zum Wandeln der gemultiplexten Ausgabe aus dem Uplinkmultiplexer in ein optisches Signal einer Wellenlänge λᵢ; und
- einen optischen Uplinkmultiplexer (31B) zum Liefern des gewandelten optischen Signals aus dem elektrisch-optischen Uplinkwandler als ein optisches Uplinksignal an die optische Uplinkfaser (20B); und
die Teiler/Kombinierer-Einheit (100B) umfasst:
- einen optischen Demultiplexer (14B) zum Demultiplexen des optischen Uplinksignals aus der optischen Uplinkfaser in optische Signale der N Wellenlängen;
- N optisch-elektrische Uplinkwandler (13B-1 bis 13B-N), jeweils zum Wandeln der optischen Uplinksignale der N Wellenlängen in elektrische Signale;
- N Uplink-Demultiplexer (12B-1 bis 12B-N), die jeweils mit dem elektrischen Ausgangssignal von einem der N optisch-elektrischen Uplinkwandler versorgt sind, wobei ein i-ter der N Uplink-Demultiplexer das daran angelegte elektrische Signal in K erste Uplink-Hochfrequenzsignale der Frequenzbänder F'_{A-1}, ..., F'_{A-K} und L zweite Uplink-Hochfrequenzsignale der Frequenzbänder F_{B-1}, ..., F_{B-L} trennt; und
- K Uplink-Kombinierer (11B-1 bis 11B-K), von denen ein j-ter eingerichtet ist, von den N Uplink-Multiplexern die ersten Uplink-Hochfrequenzsignale des Frequenzbandes F'_{A-j} zu empfangen, wobei j = 1,... K ist, die ersten Uplink-Hochfrequenzsignale zu kombinieren und die kombinierte Ausgabe an einen j-ten von K ersten Ausgangsanschlüssen (X'₁ bis X'_{K}) zu liefern;
wobei die L zweiten Uplink-Hochfrequenzsignale der Frequenzbänder F'_{B-1}, ..., F'_{B-L} aus dem i-ten Uplink-Demultiplexer an einen i-ten der Ausgangsanschlüsse eines jeden der L Sätze von N zweiten Ausgangsanschlüssen (Y'₁₁ bis Y'_{LN}) ausgegeben werden.

16. Kommunikationsgerät nach Anspruch 1, bei dem das erste und das zweite Kommunikationssystem zwei K Kommunikationssysteme sind, die implementiert sind, indem eine von den N Funkzugangseinheiten (30-1 bis 30-N) gebildete Einzelzelle veranlasst wird, K-fach zu wirken, wobei K eine ganze Zahl gleich oder größer als 2 ist;
die Teiler/Kombinierer-Einheit (100) umfasst:
- K Downlink-Teiler (11A-1 bis 11A-K) jeweils zum Teilen eines von K Downlink-Hochfrequenzsignalen von Frequenzbändern F_{A-1}, ..., F_{A-K}, die an K der ersten Eingangsanschlüsse angelegt sind, in N Downlink-Hochfrequenzsignale;
- N Downlink-Multiplexer (12A-1 bis 12A-N) jeweils zum Multiplexen von K Downlink-Hochfrequenzsignalen, eines aus jedem der K Downlink-Teiler;
- N elektrisch-optische Downlinkwandler (13A-1 bis 13A-N) zum Wandeln der Ausgaben aus den N Downlink-Multiplexern in optische Signale von jeweils unterschiedlichen Wellenlängen λ₁, ..., λ_{N}; und
einen optischen Downlink-Multiplexer (14A) zum Multiplexen der optischen Signale von den N elektrisch-opischen Downlinkwandlern und Liefern des gemultiplexten optischen Signals als ein optisches Downlinksignal an die optische Downlinkfaser (20A); und
wobei, wenn i = 1,...N ist, eine i-te der N Funkzugangseinheiten (30A-1 bis 30A-N) umfasst:
- einen optischen Downlink-Demultiplexer (31A) zum Extrahieren des optischen Downlinksignals der Wellenlänge λᵢ aus dem optischen Downlinksignal auf der optischen Downlinkfaser;
- einen optisch-elektrischen Downlinkwandler (32A) zum Wandeln des von dem optischen Downlink-Demultiplexer extrahierten optischen Downlinksignals in ein elektrisches Signal; und
- einen Downlink-Demultiplexer (38A) zum Extrahieren der K Downlink-Hochfrequenzsignale der Frequenzbänder F_{A-1}, ..., F_{A-K} aus dem elektrischen Signal von dem optisch-elektrischen Downlinkwandler und Liefern der K Downlink-Hochfrequenzsignale an die Antennenmittel (36Aa-1 bis 36Aa-K).

17. Kommunikationsgerät nach Anspruch 16, bei dem die i-te Funkzugangseinheit (30B-i) ferner umfasst:
- K Uplinkfilter (35Ba-1 bis 35Ba-K) zum Extrahieren von Uplink-Hochfrequenzsignalen aus Frequenzbändern F'_{A-1}, ..., F'_{A-K} aus einem Empfangssignal der Antennenmittel (36Ba-1 bis 36Ba-K);
- einen Uplink-Multiplexer (38B) zum Multiplexen der Uplink-Hochfrequenzsignale aus den K Uplinkfiltern;
- einen elektrisch-optischen Uplinkwandler (32B) zum Wandeln der Ausgabe aus dem Uplink-Multiplexer in ein optisches Signal der Wellenlänge λⱼ; und
- einen optischen Uplink-Multiplexer (31B) zum Liefern des optischen Signals aus dem elektrisch-optischen Uplinkwandler als ein optisches Uplinksignal an die optische Uplinkfaser (20B); und
die Teiler/Kombinierer-Einheit (100B) umfasst:
- einen optischen Uplink-Demultiplexer (14B) zum Demultiplexen des optischen Uplinksignals von der optischen Uplinkfaser in N elektrische Uplinksignale der Wellenlängen λ₁, ..., λ_{N};
- N optisch-elektrische Uplinkwandler (13B-1 bis 13B-N) zum Wandeln der N optischen Uplinksignale aus dem optischen Uplink-Demultiplexer in elektrische Signale;
- N Uplink-Demultiplexer (12B-1 bis 12B-N), jeweils zum Demultiplexen des elektrischen Signals aus einem entsprechenden der N optisch-elektrischen Uplinkwandler in K Hochfrequenzsignale der Frequenzbänder F'_{A-1}, ..., F'_{A-K}; und
- K Kombinierer (11B-1 bis 11B-K), von denen ein j-ter eingerichtet ist, die Hochfrequenzsignale des Frequenzbandes F'_{A-j}, eines von jedem der N Uplink-Kombinierer, in ein jeweiliges Uplink-Hochfrequenzsignal der Frequenzbänder F'_{A-j} zu kombinieren und die kombinierten Hochfrequenzsignale an einen j-ten von K Ausgangsanschlüssen der ersten Ausgangsanschlüsse zu liefern, j=1,...,K.

18. Kommunikationsgerät nach Anspruch 1, bei dem das erste und das zweite Kommunikationssystem zwei L Kommunikationssysteme sind, die implementiert sind, durch Veranlassen einer durch die N Funkzugangseinheiten gebildeten Einzelzelle, L-fach zu wirken, wobei L eine ganze Zahl größer oder gleich 2 ist, und Downlink-Hochfrequenzsignale von Frequenzbändern F_{B-1}, ..., F_{B-L} an L Sätze von N zweiten Eingangsanschlüssen geliefert werden; und
wobei, wenn i = 1, ..., N ist, die Teiler/Kombinierer-Einheit (100A) umfasst:
- N Downlink-Multiplexer (12A-1 bis 12A-N), von denen ein i-ter eingerichtet ist, die Downlink-Hochfrequenzsignale aus einem i-ten der Eingangsanschlüsse eines jeden der L Sätze von Eingangsanschlüssen zu kombinieren;
- N elektrisch-optische Downlinkwandler (13A-1 bis 13A-N) zum Wandeln der Ausgaben aus den N Downlink-Multiplexern in optische Signale unterschiedlicher Wellenlängen λ₁, ..., λ_{N}; und
- einen optischen Downlink-Multiplexer (14A) zum Multiplexen der optischen Signale aus den N elektrisch-optischen Downlinkwandlern und Liefern der gemultiplexten Ausgabe als ein optisches Downlinksignal an die optische Downlinkfaser (20A); und
eine i-te der N Funkzugangseinheiten (30A-1 bis 30A-N) umfasst:
- einen optischen Downlink-Demultiplexer (31A) zum Extrahieren des optischen Signals der Wellenlänge λᵢ aus dem optischen Downlinksignal auf der optischen Downlinkfaser;
- einen optisch-elektrischen Wandler (32A) zum Wandeln des optischen Downlinksignals von dem optischen Downlink-Demultiplexer in ein elektrisches Signal; und
- einen Downlink-Demultiplexer (38A) zum Extrahieren der Downlink-Hochfrequenzsignale der Frequenzbänder F_{B-1}, ..., F_{B-L} aus dem von dem optisch-elektrischen Downlinkwandler gewandelten elektrischen Signal und Liefern der extrahierten Downlink-Hochfrequenzsignale an die Antennenmittel (36Ab-1 bis 36Ab-L).

19. Kommunikationsgerät nach Anspruch 18, bei dem: die i-te Funkzugangseinheit umfasst:
- L Uplinkfilter (35Bb-1 bis 35Bb-L) zum Extrahieren von Uplink-Hochfrequenzsignalen aus Frequenzbändern F'_{B-1}, ..., F'_{B-L} aus einem von den Antennenmitteln empfangenen Signal;
- einen Uplink-Multiplexer (38B) zum Multiplexen der Ausgaben aus den L Uplinkfiltern;
- einen elektrisch-optischen Uplinkwandler (32B) zum Wandeln der Ausgabe aus dem Uplink-Multiplexer in ein optisches Signal der Wellenlänge λᵢ; und
- einen optischen Uplink-Multiplexer (31B) zum Liefern des optischen Signals aus dem elektrisch-optischen Uplinkwandler als ein optisches Uplinksignal an die optische Uplinkfaser (20B); und
die Teiler/Kombinierer-Einheit (100) umfasst:
- einen optischen Uplink-Demultiplexer (14B) zum Demultiplexen des optischen Uplinksignals von der optischen Uplinkfaser in N optische Uplinksignale der Wellenlängen λ₁, ..., λ_{N};
- N optisch-elektrische Wandler (13B-1 bis 13B-N) zum Wandeln der N optischen Uplinksignale aus dem optischen Uplink-Demultiplexer in N elektrische Signale;
- N Uplink-Demultiplexer (12B-1 bis 12B-N) jeweils zum Demultiplexen des elektrischen Signals aus einem der N optisch-elektrischen Uplinkwandler in Uplink-Hochfrequenzsignale unterschiedlicher Frequenzen;
wobei ein i-ter der N Uplink-Demultiplexer (12B-1 bis 12B-N) eingerichtet ist, das elektrische Signal in Uplink-Hochfrequenzsignale der Frequenzbänder F'_{B-1}, ..., F'_{B-L} zu demultiplexieren und die Uplink-Hochfrequenzsignale an einen i-ten der Ausgangsanschlüsse eines jeden von L-Sätzen von N zweiten Ausgangsanschlüssen auszugeben.

## Revendications

1. Equipement de communication comportant :
des fibres optiques (20A-1, 20A-2, 20B-1, 208-2) de liaison descendante et de liaison montante ;
N unités d'accès radio (30-11 à 30-1N, 30-21 à 30-2N), où N est un entier égal ou supérieur à 1 et chaque unité d'accès radio est connectée à une fibre optique de liaison descendante et à une fibre optique de liaison montante, et ayant:
- un moyen à antenne (36) ;
- un premier moyen de conversion (32A) destiné à recevoir un signal optique de liaison descendante depuis ladite fibre optique de liaison descendante, pour convertir le signal optique de liaison descendante en un signal RF de liaison descendante et pour envoyer le signal RF de liaison descendante par ledit moyen à antenne (36), et
- un deuxième moyen de conversion (32B) destiné à recevoir un signal RF de liaison montante par ledit moyen à antenne (36), à convertir le signal RF de liaison montante en un signal optique de liaison montante et à envoyer le signal optique de liaison montante à ladite fibre optique de liaison montante ;
**caractérisé par** :
- une unité de division/combinaison (100) ayant :
- des premières bornes d'entrée (X₁, X₂) destinées à recevoir un signal RF de liaison descendante pour un premier système de communication et des premières bornes de sortie (X'₁, X'₂) destinées à délivrer en sortie un signal RF de liaison montante pour le premier système de communication ;
- des secondes bornes d'entrée (Y₁, Y₂) destinées à recevoir un signal RF de liaison descendante pour un second système de communication et des secondes bornes de sortie (Y'₁, Y'₂) destinées à délivrer en sortie un signal RF de liaison montante pour le second système de communication ;
- un troisième moyen de conversion (12A-1, 13A-1, 12A-2, 13A-2) destiné à convertir un signal RF de liaison descendante appliqué à une première borne d'entrée pour ledit premier système de communication et un signal RF de liaison descendante appliqué à une seconde borne d'entrée pour ledit second système de communication en un signal optique, et à envoyer ce signal optique en tant que signal optique de liaison descendante par l'intermédiaire d'une fibre optique de liaison descendante auxdites unités d'accès radio (30-11 à 30-1N ; 30-21 à 30-2N) ; et
- un quatrième moyen de conversion (12B-1, 13B-1, 12B-2, 13B-2) destiné à convertir un signal optique de liaison montante, envoyé par l'intermédiaire d'une fibre optique de liaison montante depuis une unité d'accès radio, en un signal RF de liaison montante, à distinguer si le signal RF de liaison montante concerne ledit premier système de communication ou ledit second système de communication, et à appliquer un signal RF de liaison montante pour ledit premier système de communication auxdites premières bornes de sortie (X'₁, X'₂) et un signal RF de liaison montante pour ledit second système de communication auxdites secondes bornes de sortie (Y'₁, Y'₂).

2. Equipement de communication selon la revendication 1, dans lequel lesdits premier et second systèmes de communication sont un système de communication mobile et un système de communication à réseau local LAN sans fil de bandes de fréquences différentes.

3. Equipement de communication selon la revendication 1 ou 2, dans lequel ladite unité de division/combinaison (100) comporte :
un multiplexeur (12A-1 ; 12A-2) connecté auxdites premières et secondes bornes d'entrée (X₁, Y₁ ; X₂, Y₂) pour multiplexer un signal RF de communication mobile et un signal RF de réseau LAN sans fil de différentes bandes de fréquences arrivant en entrée depuis lesdites premières et secondes bornes d'entrée, respectivement ;
un convertisseur électro/optique (13A-1 ; 13A-2) destiné à convertir le signal de sortie provenant dudit multiplexeur (12A-1 ; 12A-2) en un signal optique et à appliquer ledit signal optique à ladite fibre optique de liaison descendante (20A-1 ; 20A-2) ;
un convertisseur opto/électrique (13B-1 ; 13B-2) destiné à convertir un signal optique, reçu de ladite fibre optique de liaison montante (20B-1 ; 20B-2) en un signal électrique RF ; et
un démultiplexeur (12B-1 ; 12B-2) destiné à démultiplexer le signal de sortie dudit convertisseur opto/électrique en un signal RF de communication mobile et un signal RF de réseau LAN sans fil de bandes de fréquences différentes et à appliquer ledit signal RF de communication mobile et ledit signal RF de réseau LAN sans fil auxdites premières et secondes bornes de sortie (X'₁, Y'₁ ; X'₂, Y'₂), respectivement.

4. Equipement de communication selon la revendication 3, comportant en outre :
un modem radio mobile (17) destiné à démoduler ledit signal RF de communication mobile fourni depuis ledit démultiplexeur (12B-1; 12B-2) par l'intermédiaire d'une première borne de sortie (X'₁, X'₂) et à appliquer le signal RF de communication mobile démodulé en tant que signal de communication mobile à un réseau de communication mobile, et à démoduler un signal de communication mobile fourni depuis ledit réseau de communication mobile en un signal RF de communication mobile et à appliquer ledit signal RF de communication mobile audit démultiplexeur par l'intermédiaire d'une première borne d'entrée (X₁, X₂) ; et
un moyen (15) à répéteur de réseau LAN sans fil, recevant ledit signal RF de réseau LAN sans fil provenant dudit démultiplexeur (12B-1 ; 12B-2) par l'intermédiaire d'une seconde borne de sortie (Y'₁, Y'₂), pour appliquer ledit signal RF de réseau LAN sans fil par l'intermédiaire d'une seconde borne d'entrée (Y₁, Y₂) audit démultiplexeur correspondant à la destination dudit signal RF de réseau LAN sans fil.

5. Equipement de communication selon la revendication 4, dans lequel ledit moyen (15) à répéteur de réseau LAN sans fil comporte un moyen destiné à incorporer un protocole Internet dans ledit signal RF de réseau LAN sans fil, rendant possible une connexion dudit système de réseau LAN sans fil à un réseau (80) à protocole Internet.

6. Equipement de communication selon la revendication 4, comportant en outre :
un convertisseur (101) de protocole connecté audit moyen (15) à répéteur de réseau LAN sans fil, pour convertir un protocole de système de réseau LAN sans fil en un protocole de système de communication mobile et vice versa ; et
un combinateur/séparateur (102) connecté audit convertisseur de protocole (101) et audit modem radio mobile (17) pour combiner ledit signal de communication mobile provenant dudit modem radio mobile et un signal de réseau LAN sans fil à protocole converti provenant dudit convertisseur de protocole, et pour envoyer le signal combiné audit réseau de communication mobile (70) ; et pour séparer un signal provenant dudit réseau de communication mobile en un signal de communication mobile et un signal de réseau LAN sans fil à protocole converti, et pour appliquer ledit signal de communication mobile et ledit signal de réseau LAN sans fil à protocole converti audit modem radio mobile (17) et audit convertisseur de protocole (101), respectivement.

7. Equipement de communication selon la revendication 1, dans lequel lesdits premier et second systèmes de communication sont : un système de communication unicellulaire destiné à faire fonctionner lesdites N unités d'accès radio en une cellule unique et un système de communication multicellulaire destiné à faire fonctionner lesdites N unités d'accès radio en N cellules multiples.

8. Equipement de communication selon la revendication 1 ou 7, dans lequel :
ladite unité de division/combinaison (100, 100A) comporte :
- un diviseur (11A) de liaison descendante destiné à diviser un premier signal RF d'une première bande de fréquence de liaison descendante, appliqué à une première borne d'entrée (X) dudit premier système de communication, en N signaux ;
- N multiplexeurs (12A-1 à 12A-N) de liaison descendante destinés chacun à multiplexer l'un, différent, desdits N signaux provenant dudit diviseur de liaison descendante avec l'un, correspondant, de N seconds signaux RF pour ledit second système de communication appliqué à N secondes bornes d'entrée (Y₁ à Y_{N}), certains, adjacents, desdits N seconds signaux RF ayant des fréquences différentes dans une seconde bande de fréquence de liaison descendante différente de ladite première bande de fréquence de liaison descendante ;
- N convertisseurs électro/optiques (13A-1 à 13A-N) destinés à convertir les signaux de sortie desdits N multiplexeurs de liaison descendante en signaux optiques de longueurs d'ondes différentes ; et
- un multiplexeur optique (14A) de liaison descendante destiné à multiplexer lesdits signaux optiques provenant desdits N convertisseurs électro/optiques de liaison descendante et à appliquer le signal de sortie multiplexé en tant que ledit signal optique de liaison descendante à ladite fibre optique (20A) de liaison descendante ;
lesdites N unités d'accès radio (30A-1 à 30A-N) comportant chacune :
- un démultiplexeur optique (31A) de liaison descendante destiné à extraire un signal optique de liaison descendante, de l'une desdites longueurs d'ondes différentes, dudit signal optique de liaison descendante sur ladite fibre optique de liaison descendante ;
- un convertisseur opto/électrique (32A) de liaison descendante destiné à convertir ledit signal optique extrait en un signal électrique RF ;
- un premier filtre (34Aa) de liaison descendante destiné à extraire un premier signal RF de liaison descendante, de ladite première bande de fréquence de liaison descendante, dudit signal électrique RF et à appliquer ledit premier signal RF de liaison descendante audit moyen à antenne (36Aa) ; et
- un second filtre (34Ab) de liaison descendante destiné à extraire un second signal RF de liaison descendante, dans ladite seconde bande de fréquence de liaison descendante, dudit signal électrique RF et à appliquer ledit second signal RF de liaison descendante audit moyen à antenne (36Ab).

9. Equipement de communication selon la revendication 1, 7 ou 8, dans lequel:
lesdites N unités d'accès radio (30B-1 à 30B-N) comprennent chacune :
- un premier filtre (35Ba) de liaison montante destiné à extraire un premier signal RF de liaison montante, d'une première bande de fréquence de liaison montante, d'un signal reçu dudit moyen à antenne (36Ba) ;
- un second filtre (34Bb) de liaison montante destiné à extraire un second signal RF de liaison montante, dans une seconde bande de fréquence de liaison montante différente de ladite première bande de fréquence de liaison montante, dudit signal reçu dudit moyen à antenne (36Bb) ;
- un combinateur (33B) de liaison montante destiné à combiner lesdits premier et second signaux RF de liaison montante provenant desdits premier et second filtres (34Ba, 34Bb) de liaison montante ;
- un convertisseur électro/optique (32B) de liaison montante destiné à convertir le signal de sortie dudit combinateur de liaison montante en un signal optique d'une longueur d'onde différente ; et
- un multiplexeur optique (31B) de liaison montante destiné à appliquer ledit signal optique converti, en tant que ledit signal optique de liaison montante, à ladite fibre optique (20B) de liaison montante ; et
ladite unité de division/combinaison (100, 100B) comporte :
- un démultiplexeur optique (14B) de liaison montante destiné à démultiplexer ledit signal optique provenant de ladite fibre optique (20B) de liaison montante en N signaux optiques de longueurs d'ondes différentes ;
- N convertisseurs opto/électriques (13B-1 à 13B-N) de liaison montante destinés à convertir les N signaux optiques de longueurs d'ondes différentes en signaux électriques RF ;
- N diviseurs (12B-1 à 12B-N) de liaison montante destinés à diviser chacun l'un desdits signaux électriques RF provenant desdits N convertisseurs opto/électriques de liaison montante en un premier signal RF pour ledit premier système de communication et un second signal RF pour ledit second système de communication ; et
- un second combinateur (11B) de liaison montante destiné à combiner les premiers signaux RF provenant desdits N diviseurs de liaison montante et à appliquer ledit premier signal RF combiné à une première borne de sortie (X'), les seconds signaux RF provenant desdits N diviseurs de liaison montante étant appliqués à N secondes bornes de sortie (Y'₁ à Y'_{N}).

10. Equipement de communication selon la revendication 1 ou 7, dans lequel :
ladite unité de division/combinaison (100, 100A) est conçue pour recevoir un premier signal radio RF d'une première bande de fréquence de liaison descendante à une première borne d'entrée pour ledit premier système de communication et N seconds signaux radio RF dans une seconde bande de fréquence de liaison descendante différente de ladite première bande de fréquence de liaison descendante à N secondes bornes d'entrée pour ledit second système de communication ; ladite unité de division/combinaison (100, 100A) comporte :
- N convertisseurs électro/optiques (13A-1 à 13A-N) de liaison descendante destinés à convertir les N seconds signaux radio RF en signaux optiques de longueurs d'ondes différentes ;
- un multiplexeur optique (14A) de liaison descendante destiné à multiplexer lesdits signaux optiques provenant desdits N convertisseur électro/optiques de liaison descendante ; et
- un modulateur optique extérieur (9A) destiné à moduler extérieurement le signal optique multiplexé provenant dudit multiplexeur optique de liaison descendante par ledit premier signal radio RF et à appliquer le signal de sortie modulé en tant que ledit signal optique de liaison descendante à ladite fibre optique (20A) de liaison descendante ; et
lesdites N unités d'accès radio (30A-1 à 30A-N) comportent chacune :
- un démultiplexeur optique (31A) de liaison descendante destiné à extraire un signal optique de liaison descendante, de l'une desdites longueurs d'ondes différentes, dudit signal optique de liaison descendante sur ladite fibre optique (20A) de liaison descendante ;
- un convertisseur opto/électrique (32A) de liaison descendante destiné à convertir ledit signal optique de liaison descendante, extrait par ledit démultiplexeur optique de liaison descendante, en un signal électrique RF ;
- un premier filtre (34Aa) de liaison descendante destiné à extraire un premier signal RF de liaison descendante, de ladite première bande de fréquence de liaison descendante, dudit signal électrique RF et à appliquer ledit premier signal RF de liaison descendante extrait audit moyen à antenne (36Aa) ; et
- un second filtre (34Ab) de liaison descendante destiné à extraire un second signal RF de liaison descendante, dans ladite seconde bande de fréquence de liaison descendante, dudit signal électrique RF et à appliquer ledit second signal RF de liaison descendante extrait audit moyen à antenne (36Ab).

11. Equipement de communication selon la revendication 1, 7 ou 10, dans lequel:
lesdites N unités d'accès radio (30B-1 à 30B-N) comprennent chacune :
- un premier filtre (35Ba) de liaison montante destiné à extraire un premier signal RF de liaison montante, d'une première bande de fréquence de liaison montante, d'un signal reçu dudit moyen à antenne (36Ba) ;
- un second filtre (34Bb)de liaison montante destiné à extraire un second signal RF de liaison montante, dans une seconde bande de fréquence de liaison montante différente de ladite première bande de fréquence de liaison montante, dudit signal reçu dudit moyen à antenne (36Bb) ;
- un combinateur (33B) de liaison montante destiné à combiner lesdits premier et second signaux RF de liaison montante provenant desdits premier et second filtres (34Ba, 34Bb) de liaison montante ;
- un convertisseur électro/optique (32B) de liaison montante destiné à convertir le signal de sortie dudit combinateur (33B) de liaison montante en un signal optique d'une longueur d'onde différente ; et
- un multiplexeur optique (31B) de liaison montante destiné à appliquer ledit signal optique converti, en tant que ledit signal optique de liaison montante, à ladite fibre optique (20B) de liaison montante ; et
ladite unité de division/combinaison (100, 100B) comporte :
un diviseur optique (9B) de liaison montante destiné à diviser ledit signal optique provenant de ladite fibre optique (20B) de liaison montante en deux signaux optiques ;
- un premier convertisseur opto/électrique (13B-0) de liaison montante destiné à convertir l'un desdits deux signaux optiques, provenant dudit diviseur optique (9B) de liaison montante, en un premier signal électrique de liaison montante ;
- un troisième filtre (19B-0) de liaison montante destiné à extraire ledit premier signal RF de liaison montante, de ladite première bande de fréquence de liaison montante, dudit premier signal électrique de liaison montante et à appliquer ledit premier signal RF de liaison montante, extrait, à ladite première borne de sortie pour ledit premier système de communication ;
- un démultiplexeur optique (14B) de liaison montante destiné à démultiplexer l'autre signal optique divisé par ledit diviseur optique (9B) en N signaux optiques de longueurs d'ondes différentes ;
- N convertisseurs opto/électriques (13B-1 à 13B-N) de liaison montante destinés à convertir les N signaux optiques de longueurs d'ondes différentes en N seconds signaux électriques RF de liaison montante ; et
- N quatrièmes filtres (19B-1 à 19B-N) de liaison montante destinés à extraire N seconds signaux RF de liaison montante, de fréquences différentes dans ladite seconde bande de fréquence de liaison montante, desdits seconds signaux électriques de liaison RF et à appliquer lesdits N seconds signaux RF de liaison montante, extraits, à N secondes bornes de sortie pour ledit second système de communication.

12. Equipement de communication selon la revendication 9 ou 11, dans lequel :
ledit moyen à antenne (36a, 36b) de chacune desdites unités d'accès radio (30-i) comporte une première antenne (36a) destinée à émettre et recevoir des signaux RF pour lesdites premières bandes de fréquences de liaison montante et descendante, et une seconde antenne (36b) destinée à émettre et recevoir des signaux RF desdites secondes bandes de fréquences de liaison montante et descendante ; et
chacune desdites unités d'accès radio (30-i) comporte un premier duplexeur (37a) destiné à appliquer ledit signal RF de ladite première bande de fréquence de liaison montante, reçu par ladite première antenne (36a), audit premier filtre (34Ba) de liaison montante et à appliquer ledit signal RF de sortie provenant dudit premier filtre (34Aa) de liaison descendante à ladite première antenne (36a), et un second duplexeur (37b) destiné à appliquer ledit signal RF dans ladite seconde bande de fréquence de liaison montante, reçu par ladite seconde antenne (36b), audit second filtre (34Bb) de liaison montante et à appliquer le signal RF de sortie provenant dudit second filtre (35Ab) de liaison descendante à ladite seconde antenne (36b).

13. Equipement de communication selon la revendication 1, dans lequel : ledit premier système de communication est un système dans lequel une cellule unique formée par lesdites N unités d'accès radio (30A-1 à 30A-N) fonctionnent en K unités multiples en correspondance avec K premières bornes d'entrée (X₁ à X_{K}) et K premières bornes de sortie (X'₁ à X'_{K}) ; et ledit second système de communication est un système sur lequel des cellules multiples formées par lesdites N unités d'accès radio fonctionnent en L unités multiples en correspondance avec L jeux de secondes bornes d'entrée (Y₁₁ à Y_{LN}), chacun desdits L jeux étant composé de N secondes bornes d'entrée.

14. Equipement de communication selon la revendication 13, dans lequel : des premiers signaux RF de liaison descendante de K bandes de fréquences différentes F_{A-1}, ..., F_{A-K} sont appliqués en entrée auxdites K premières bornes d'entrée (X₁ à X_{K}), et les seconds signaux RF de liaison descendante de bandes de fréquences différentes F_{B-1}, ..., F_{B-L} sont appliqués en entrée auxdits L jeux de secondes (Y₁₁ à Y_{LN});
ladite unité de division/combinaison (100, 100A) comporte:
- K diviseurs (11A-1 à 11A-K) de liaison descendante destinés chacun à diviser l'un, correspondant, desdits K premiers signaux de fréquence RF de liaison descendante desdites K bandes de fréquences F_{A-1}, ..., F_{A-K} de liaison descendante arrivant en entrée auxdites K premières bornes d'entrée, en N signaux RF de liaison descendante ;
- N multiplexeurs (12A-1 à 12A-N) de liaison descendante, dont un i^{ième}, en supposant que i=1, ..., N, est conçu pour multiplexer les i^{ièmes} signaux de sortie desdits K diviseurs de liaison descendante et lesdits seconds signaux RF de liaison descendante provenant d'une i^{ième} des bornes d'entrée de chacun desdits L jeux ;
- N convertisseurs électro/optiques (13A-1 à 13A-N) de liaison descendante destinés à convertir chacun le signal de sortie multiplexé provenant de l'un desdits N multiplexeurs de liaison descendante en signaux optiques de liaison descendante de N longueurs d'ondes différentes λ₁, ..., λ_{N}; et
- un multiplexeur optique (14A) de liaison descendante destiné à multiplexer les signaux optiques de sortie provenant desdits N convertisseurs électro/optiques de liaison descendante et à appliquer le signal optique multiplexé en tant que signal optique de liaison descendante à ladite fibre optique (20A) de liaison descendante ; et
une i^{ième} desdites N unités d'accès radio (30A-1 à 30A-N) comporte :
- un démultiplexeur optique (31A) de liaison descendante destiné à extraire le signal optique de liaison descendante, de la longueur d'onde λᵢ, dudit signal optique de liaison descendante sur ladite fibre optique de liaison descendante ;
- un convertisseur opto/électrique (32A) de liaison descendante destiné à convertir le signal optique de liaison descendante, extrait, en un signal électrique ; et
- un démultiplexeur (38A) de liaison descendante destiné à extraire K premiers signaux RF desdites bandes de fréquences F_{A-1}, ..., F_{A-K} pour ledit premier système de communication et L seconds signaux RF desdites bandes de fréquences F_{B-1}, ..., F_{B-L} pour ledit second système de communication, du signal électrique converti par ledit convertisseur opto/électrique de liaison descendante.

15. Equipement de communication selon la revendication 14, dans lequel ladite i^{ième} unité d'accès radio comporte en outre :
- K+L filtres (35Ba-1 à 35Ba-K ; 35Bb-1 à 35Bb-L) de liaison montante destinés à extraire K premiers signaux RF de liaison montante, de bandes de fréquences F'_{A-1}, ..., F'_{A-K} et L seconds signaux RF de liaison montante de bandes de fréquences F'_{B-1}, ..., F'_{B-L}, d'un signal reçu dudit moyen à antenne (36Ba-1 à 36Ba-K ; 36Bb-1 à 36Bb-L) ;
- un multiplexeur (38B) de liaison montante destiné à multiplexer lesdits signaux RF extraits par lesdits K+L filtres de liaison montante ;
- un convertisseur électro/optique (32B) de liaison montante destiné à convertir le signal de sortie multiplexé, provenant dudit multiplexeur de liaison montante, en un signal optique d'une longueur d'onde λᵢ; et
- un multiplexeur optique (31B) de liaison montante destiné à appliquer ledit signal optique converti, provenant dudit convertisseur électro/optique de liaison montante, en tant que signal optique de liaison montante à ladite fibre optique (20B) de liaison montante ; et
ladite unité de division/combinaison (100B) comporte :
- un démultiplexeur optique (14B) destiné à démultiplexer le signal optique de liaison montante, provenant de ladite fibre optique de liaison montante, en signaux optiques desdites N longueurs d'ondes ;
- N convertisseurs opto/électriques (13B-1 à 13B-N) de liaison montante destinés à convertir chacun lesdits signaux optiques de liaison montante de N longueurs d'ondes en signaux électriques ;
- N démultiplexeurs (12B-1 à 12B-N) de liaison montante recevant chacun le signal électrique de sortie de l'un desdits N convertisseurs opto/électriques de liaison montante, un i^{ième} desdits N démultiplexeurs de liaison montante séparant le signal électrique qui lui est appliqué en K premiers signaux RF de liaison montante desdites bandes de fréquences F'_{A-1}, ..., F'_{A-K} et L seconds signaux RF de liaison montante desdites bandes de fréquences F'_{B-1}, ..., F'_{B-L}; et
- K combinateurs (11B-1 à 11B-K) de liaison montante, dont un j^{ième} est conçu pour recevoir desdits N démultiplexeurs de liaison montante les premiers signaux RF de liaison montante de la bande de fréquence F'_{A-j}, où j =1, ...,K, pour combiner lesdits premiers signaux RF de liaison montante et pour délivrer en sortie le signal de sortie combiné à une j^{ième} de K premières bornes de sortie (X'₁ à X'_{K}) ;
dans lequel les L seconds signaux RF de liaison montante desdites bandes de fréquences F'_{B-1, ...,} F'_{B-L} provenant dudit i^{ième} démultiplexeur de liaison montante sont délivrés en sortie à une i^{ième} des bornes de sortie de chacun desdits L jeux de N secondes bornes de sortie (Y'₁₁ à Y'_{LN}).

16. Equipement de communication selon la revendication 1, dans lequel lesdits premier et second systèmes de communication sont deux K systèmes de communication qui sont mis en oeuvre en faisant fonctionner une cellule unique, formée desdites N unités d'accès radio (30-1 à 30-N), en K unités multiples, où K est un entier égal ou supérieur à 2 ;
ladite unité de division/combinaison (100) comporte :
- K diviseurs (11A-1 à 11A-K) de liaison descendante destinés à diviser chacun l'un de K signaux RF de liaison descendante, des bandes de fréquences F_{A-1}, ..., F_{A-K} appliquées à K desdites premières bornes d'entrée, en N signaux RF de liaison descendante ;
- N multiplexeurs (12A-1 à 12A-N) de liaison descendante destinés à multiplexer chacun K signaux RF de liaison descendante, un signal provenant de chacun desdits K diviseurs de liaison descendante ;
- N convertisseurs électro/optiques (13A-1 à 13A-N) de liaison descendante destinés à convertir les signaux de sortie provenant desdits N multiplexeurs de liaison descendante en signaux optiques de longueurs d'ondes λ₁, ..., λ_{N}, respectivement ; et
- un multiplexeur optique (14A) de liaison descendante destiné à multiplexer lesdits signaux optiques provenant desdits N convertisseurs électro/optiques de liaison descendante et à appliquer le signal optique multiplexé, en tant que signal optique de liaison descendante, à ladite fibre optique (20A) de liaison descendante ; et
dans lequel, soit i=1, ..., N, une i^{ième} desdites N unités d'accès radio (30A-1 à 30A-N) comporte :
- un démultiplexeur optique (31A) de liaison descendante destiné à extraire le signal optique de liaison descendante, de la longueur d'onde λᵢ, dudit signal optique de liaison descendante sur ladite fibre optique de liaison descendante ;
- un convertisseur opto/électrique (32A) de liaison descendante destiné à convertir ledit signal optique de liaison descendante, extrait par ledit démultiplexeur optique de liaison descendante, en un signal électrique ; et
- un démultiplexeur (38A) de liaison descendante destiné à extraire lesdits K signaux RF de liaison descendante, desdites bandes de fréquences F_{A-1}, ..., F_{A-K,} dudit signal électrique provenant dudit convertisseur opto/électrique de liaison descendante et à appliquer lesdits K signaux RF de liaison descendante audit moyen à antenne (36Aa-1 à 36Aa-K).

17. Equipement de communication selon la revendication 16, dans lequel ladite i^{ième} unité d'accès radio (30B-i) comporte en outre :
- K filtres (35Ba-1 à 35Ba-K) de liaison montante destinés à extraire des signaux RF de liaison montante, de bandes de fréquences F'_{A-1}, ..., F'_{A-K}, d'un signal reçu dudit moyen à antenne (36Ba-1 à 36Ba-K) ;
- un multiplexeur (38B) de liaison montante destiné à multiplexer lesdits signaux RF de liaison montante provenant desdits K filtres de liaison montante ;
- un convertisseur électro/optique (32B) de liaison montante destiné à convertir le signal de sortie dudit multiplexeur de liaison montante en un signal optique de la longueur d'onde λᵢ; et
- un multiplexeur optique (31B) de liaison montante destiné à appliquer ledit signal optique, provenant dudit convertisseur électro/optique de liaison montante, en tant que signal optique de liaison montante à ladite fibre optique (20B) de liaison montante ; et
ladite unité de division/combinaison (100B) comporte :
- un démultiplexeur optique (14B) de liaison montante destiné à démultiplexer ledit signal optique de liaison montante, provenant de ladite fibre optique de liaison montante, en N signaux électriques de liaison montante desdites longueurs d'ondes λ₁, ..., λ_{N};
- N convertisseurs opto/électriques (13B-1 à 13B-N) de liaison montante destinés à convertir lesdits N signaux optiques de liaison montante, provenant dudit démultiplexeur optique de liaison montante, en signaux électriques ;
- N démultiplexeurs (12B-1 à 12B-N) de liaison montante destinés à démultiplexer chacun le signal électrique provenant de l'un, correspondant, desdits N convertisseurs opto/électriques de liaison montante en K signaux RF desdites bandes de fréquence F_{'A-1}, ..., F'_{A-K}; et
- K combinateurs (11B-1 à 11B-K) dont un j^{ième} est conçu pour combiner les signaux RF de la bande de fréquence F'_{A-j}, à raison d'un provenant de chacun desdits N combinateurs de liaison montante, en signaux RF respectifs de liaison montante desdites bandes de fréquences F'_{A-j} et à appliquer lesdits signaux RF combinés à une j^{ième} des K bornes de sortie desdites premières bornes de sortie, j=1, ..., K.

18. Equipement de communication selon la revendication 1, dans lequel lesdits premier et second systèmes de communication sont deux L systèmes de communication qui sont mis en oeuvre en faisant fonctionner une cellule unique, formés par lesdites N unités d'accès radio, en L unités multiples, où L est en entier égal ou supérieur à 2, et des signaux RF de liaison descendante, et des bandes de fréquences F_{B-1}, ..., F_{B-L}, sont appliquées à L jeux de N secondes bornes d'entrée ; et
dans lequel, en supposant que i=1, .... N, ladite unité de division/combinaison (100A) comporte :
- N multiplexeurs (12A-1 à 12A-N) de liaison descendante dont un premier i^{ième} est conçu pour combiner lesdits signaux RF de liaison descendante provenant d'une i^{ième} des bornes d'entrée de chacun desdits L jeux de bornes d'entrée ;
- N convertisseurs électro/optiques (13A-1 à 13A-N) de liaison descendante destinés à convertir les signaux de sortie desdits N multiplexeurs de liaison descendante en signaux optiques de longueurs d'ondes différentes λ₁, ..., λ_{N} ; et
- un multiplexeur optique (14A) de liaison descendante destiné à multiplexer lesdits signaux optiques provenant desdits N convertisseurs électro/optiques de liaison descendante et à appliquer le signal de sortie multiplexé en tant que signal optique de liaison descendante à ladite fibre optique (20A) de liaison descendante ; et
une i^{ième} desdites N unités d'accès radio (30A-1 à 30A-N) comporte :
- un démultiplexeur optique (31A) de liaison descendante destiné à extraire le signal optique, de la longueur d'onde λᵢ, dudit signal optique de liaison descendante sur ladite fibre optique de liaison descendante ;
- un convertisseur opto/électrique (32A) destiné à convertir ledit signal optique de liaison descendante, provenant dudit démultiplexeur optique de liaison descendante, en un signal électrique ; et
- un démultiplexeur (38A) de liaison descendante destiné à extraire lesdits signaux RF de liaison descendante, desdites bandes de fréquences F_{B-1}, ..., F_{B-L}, dudit signal électrique converti par ledit convertisseur opto/électrique de liaison descendante et à appliquer lesdits signaux RF de liaison descendante, extraits, audit moyen à antenne (36Ab-1 à 36Ab-L).

19. Equipement de communication selon la revendication 18, dans lequel : ladite i^{ième} unité d'accès radio comporte :
- L filtres (35Bb-1 à 35Bb-L) de liaison montante destinés à extraire des signaux RF de liaison montante, de bandes de fréquences F'_{B-1}, ..., F'_{B-L}, d'un signal reçu par ledit moyen à antenne ;
- un multiplexeur (38B) de liaison montante destiné à multiplexer les signaux de sortie desdits L filtres de liaison montante ;
- un convertisseur électro/optique (32B) de liaison montante destiné à convertir le signal de sortie dudit multiplexeur de liaison montante en un signal optique de ladite longueur d'onde λᵢ; et
- un multiplexeur optique (31B) de liaison montante destiné à appliquer ledit signal optique, provenant dudit convertisseur électro/optique de liaison montante, en tant que signal optique de liaison montante à ladite fibre optique (20B) de liaison montante ; et
ladite unité de division/combinaison (100) comporte :
- un démultiplexeur optique (14B) de liaison montante destiné à démultiplexer ledit signal optique de liaison montante, provenant de ladite fibre optique de liaison montante, en N signaux optiques de liaison montante desdites longueurs d'ondes λ₁, ..., λ_{N};
- N convertisseurs opto/électriques (13B-1 à 13B-N) destinés à convertir les N signaux optiques de liaison montante, provenant dudit démultiplexeur optique de liaison montante, en N signaux électriques ; et
- N démultiplexeurs (12B-1 à 12B-N) de liaison montante destinés à démultiplexer chacun le signal électrique, provenant de l'un desdits N convertisseurs opto/électriques de liaison montante, en signaux RF de liaison montante de fréquences différentes ; et
dans lequel un i^{ième} desdits N démultiplexeurs (12B-1 à 12B-N) de liaison montante est conçu pour démultiplexer ledit signal électrique en signaux RF de liaison montante desdites bandes de fréquences F'_{B-1}, ..., F'_{B-L} et à délivrer en sortie lesdits signaux RF de liaison montante à une i^{ième} des bornes de sortie de chacun de L jeux de N secondes bornes de sorties.
